(19) Europäisches Patentamt / European Patent Office / Office européen des brevets

(11) **EP 4 362 350 A1**

(12) **EUROPEAN PATENT APPLICATION**
published in accordance with Art. 153(4) EPC

(43) Date of publication:
**01.05.2024 Bulletin 2024/18**

(21) Application number: **22852313.0**

(22) Date of filing: **04.08.2022**

(51) International Patent Classification (IPC):
**H04B 7/185** (2006.01)

(52) Cooperative Patent Classification (CPC):
**H04B 7/185**

(86) International application number:
**PCT/CN2022/110346**

(87) International publication number:
**WO 2023/011602 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 CN 202110901843**
**27.09.2021 CN 202111137529**

(71) Applicant: **Huawei Technologies Co., Ltd.**
**Shenzhen, Guangdong 518129 (CN)**

(72) Inventors:
• **SONG, Dake**
  **Shenzhen, Guangdong 518129 (CN)**
• **YU, Xiaoliang**
  **Shenzhen, Guangdong 518129 (CN)**
• **QIAN, Feng**
  **Shenzhen, Guangdong 518129 (CN)**
• **ZHONG, Jilei**
  **Shenzhen, Guangdong 518129 (CN)**
• **ZHU, Xudong**
  **Shenzhen, Guangdong 518129 (CN)**
• **WANG, Bao**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **TRANSMISSION CONTROL METHOD IN SATELLITE COMMUNICATION SYSTEM AND RELATED APPARATUS**

(57)    This application discloses a transmission control method in a satellite communication system and a related apparatus. A terminal may determine, through satellite selection, a target satellite with a strongest signal from at least one geosynchronous orbit satellite. The terminal may determine a satellite transmission link direction based on location information of the terminal and location information of the target satellite. The terminal may further determine a radiation direction of a satellite antenna in the terminal based on geomagnetic data, attitude data, and the like of the terminal. Then, the terminal may enable, by using the satellite transmission link direction and the radiation direction of the satellite antenna, the radiation direction of the satellite antenna in the terminal to be aligned with the target satellite. After aligning with the target satellite, the terminal may send a first data packet to the target satellite along the radiation direction of the satellite antenna. In this way, without relying on an external component, a user can align the radiation direction of the satellite antenna in the terminal with the target satellite, to enhance communication performance between the terminal and the target satellite, and simplify satellite selection and satellite alignment operations performed by the user.

**(Cont. next page)**

S801: Determine, in response to an input of sending a first data packet, a target satellite according to a preset rule

S802: Determine, based on location information of a terminal 100 and location information of the target satellite, an azimuth angle and a pitch angle in a satellite transmission link direction in a ground coordinate system

S803: Determine, based on geomagnetic data and attitude data of the terminal 100, a pitch angle and an azimuth angle in a reference direction of the terminal 100 in a geomagnetic coordinate system

S804: Determine, based on the azimuth angle and the pitch angle in the reference direction of the terminal 100 in the geomagnetic coordinate system and a magnetic declination angle between the geomagnetic coordinate system and the ground coordinate system, an azimuth angle and a pitch angle in the reference direction of the terminal 100 in the ground coordinate system

S805: Determine, based on a pitch angle and an azimuth angle in a radiation direction of a satellite antenna in a spherical coordinate system of the terminal, an azimuth angle offset and a pitch angle offset between the radiation direction of the satellite antenna in the ground coordinate system and the reference direction of the terminal 100 in the ground coordinate system

TO
FIG. 8B

TO
FIG. 8B

FIG. 8A

CONT.
FROM
FIG. 8A

CONT.
FROM
FIG. 8A

S806: Compensate the azimuth angle and the pitch angle in the reference direction of the terminal 100 in the ground coordinate system based on the azimuth angle offset and the pitch angle offset, to obtain a pitch angle and an azimuth angle in the radiation direction of the satellite antenna in the ground coordinate system

S810: Receive an input for adjusting the attiude of the terminal 100

S807: Determine an azimuth angle difference and a pitch angle difference between the radiation direction of the satellite antenna and the satellite transmission link direction based on the pitch angle and the azimuth angle in the radiation direction of the satellite antenna and the pitch angle and the azimuth angle in the satellite transmission link direction in the ground coordinate system

S809: Display deviation prompt information, where the deviation prompt information prompts the user to adjust an attitude of the terminal 100, so that the radiation direction of the satellite antenna is aligned with the target satellite

S808: Determine whether the azimuth angle difference is less than or equal to a first threshold and whether the pitch angle difference is less than or equal to a second threshold

No

Yes

S811: Display alignment prompt information, where the alignment prompt information is used to prompt the user that the radiation direction of the satellite antenna is aligned with the target satellite

FIG. 8B

## Description

This application claims priority to Chinese Patent Application No. 202110901843.9, filed with the China National Intellectual Property Administration on August 6, 2021 and entitled "TRANSMISSION CONTROL METHOD IN BEIDOU COMMUNICATION SYSTEM AND RELATED APPARATUS", and Chinese Patent Application No. 202111137529.4, filed with the China National Intellectual Property Administration on September 27, 2021 and entitled "TRANSMISSION CONTROL METHOD IN SATELLITE COMMUNICATION SYSTEM AND RELATED APPARATUS", which are incorporated herein by reference in their entireties.

## TECHNICAL FIELD

This application relates to the fields of terminals and satellite communication technologies, and in particular, to a transmission control method in a satellite communication system and a related apparatus.

## BACKGROUND

A BeiDou navigation satellite system is a major infrastructure integrating positioning, timing, and communication. A BeiDou short packet communication service is one of features that distinguish the BeiDou navigation satellite system from GPS, GLONASS, GALILEO and other global navigation systems. The BeiDou short packet communication service is especially suitable for communication in an area in which mobile communication is not covered, or mobile communication cannot be covered, or a communication system is damaged, for example, an ocean, a desert, a grassland, or a no-man's land. In a short packet system of a BeiDou-3 satellite, a short packet technology system is upgraded, and some necessary resources of a communication system of the BeiDou short packet service are open for civil use. Based on characteristics of civil services and devices, a communication protocol needs to be designed based on characteristics of the communication system of the BeiDou short packet service.

Currently, steps in which a terminal performs satellite searching by using a global navigation satellite system (global navigation satellite system, GNSS) may include: First, the terminal may perform base station positioning through a communication chip, to obtain a rough geographical location. Then, the terminal sends the rough geographical location to the base station. After obtaining a corresponding navigation message by querying the received geographical location, the base station may obtain an accurate geographical location of the terminal, and obtain a corresponding visible satellite ephemeris (with a valid time of about 4 hours) based on the accurate geographical location. Then, the base station sends a visible satellite ephemeris file to the terminal. The terminal then performs targeted satellite searching based on the accurate ephemeris file. However, because the terminal usually uses a geosynchronous orbit satellite for communication without a network, the terminal cannot obtain the accurate ephemeris file through the base station. Therefore, a current satellite searching method is not applicable to a satellite communication system.

Currently, the terminal mainly adjusts an antenna attitude based on measurement performed by an external component (for example, a mechanical support) or an external device, to align a radiation direction of a satellite antenna with a target satellite, so as to improve performance of satellite communication. Alternatively, the terminal may upgrade hardware of the terminal to improve performance of satellite communication. Therefore, costs are high in terms of spending, size, power consumption, and the like, and this method is not applicable to a small handheld mobile device like a mobile phone.

## SUMMARY

This application provides a transmission control method in a satellite communication system and a related apparatus. A terminal may determine, through satellite selection, a target satellite with a strongest signal from at least one geosynchronous orbit satellite. The terminal may determine a satellite transmission link direction based on location information of the terminal (for example, longitude and latitude of the terminal) and location information of the target satellite (for example, longitude and latitude of a beam center of the target satellite, and altitude of the target satellite). The terminal may further determine a radiation direction of a satellite antenna in the terminal based on geomagnetic data, attitude data, and the like of the terminal. Then, the terminal may enable, by using the satellite transmission link direction and the radiation direction of the satellite antenna, the radiation direction of the satellite antenna in the terminal to be aligned with the target satellite. After aligning with the target satellite, the terminal may send a first data packet to the target satellite along the radiation direction of the satellite antenna. In this way, without relying on an external component, a user can align the radiation direction of the satellite antenna in the terminal with the target satellite, to enhance communication performance between the terminal and the target satellite, and simplify satellite selection and satellite alignment operations performed by the user.

According to a first aspect, this application provides a transmission control method in a satellite communication system. The transmission control method includes: Aterminal displays a first interface, where the first interface includes a target satellite selected from a plurality of geosynchronous orbit GEO satellites and a pitch angle deviation and an azimuth angle deviation that are between a radiation direction of a satellite antenna in the terminal and a satellite transmission link direction, and the satellite transmission link direction is a direction from a location of the terminal to a location of the target satellite.

The terminal receives a first input for adjusting an attitude of the terminal.

When the terminal determines that the radiation direction of the satellite antenna is aligned with the target satellite, the terminal sends a first data packet to the target satellite.

According to the method provided in this application, a user may be prompted how to align the radiation direction of the satellite antenna with the target satellite. This simplifies satellite selection and satellite alignment operations performed by the user, and improves communication quality between the terminal and the target satellite.

In a possible implementation, before the terminal displays the first interface, the method further includes: The terminal displays a second interface, where the second interface displays the plurality of geosynchronous orbit satellites. After the terminal determines the target satellite from the plurality of geosynchronous orbit satellites, the terminal displays a first mark, where the first mark indicates that the target satellite is selected.

In a possible implementation, a service type of the first data packet is a packet communication service. Before the terminal displays the first interface, the method further includes: The terminal displays a third interface, where the third interface includes first message content entered by the user and a first sending control, and the first data packet includes the first message content. The terminal receives a second input for the first sending control.

That a terminal displays a first interface specifically includes: The terminal displays the first interface in response to the first input.

In a possible implementation, a service type of the first data packet is a packet communication service. Before the terminal displays the second interface, the method further includes: The terminal displays a third interface, where the third interface includes first message content entered by the user and a first sending control, and the first data packet includes the first message content. The terminal receives a second input for the first sending control.

That the terminal displays a second interface specifically includes: The terminal displays the second interface in response to the second input.

In a possible implementation, after the terminal sends the first data packet to the target satellite, the method further includes: The terminal receives a first application layer return notification.

When the first application layer return notification indicates that the first data packet is successfully received, the terminal displays success prompt information, where the success prompt information is used to prompt the user that the first data packet is successfully sent.

When the first application layer return notification indicates that the first data packet fails to be received, the terminal displays failure prompt information, where the failure prompt information is used to prompt the user that the first data packet fails to be sent.

In a possible implementation, a service type of a first application layer packet is a mail message download service. Before the terminal displays the first interface, the method further includes: The terminal displays a fourth interface, where the fourth interface includes a first receiving control. The terminal receives a third input for the first receiving control.

That a terminal displays a first interface specifically includes: The terminal displays the first interface in response to the third input.

In a possible implementation, a service type of a first application layer packet is a mail message download service. Before the terminal displays the second interface, the method further includes: The terminal displays a fourth interface, where the fourth interface includes a first receiving control. The terminal receives a third input for the first receiving control.

That the terminal displays a second interface specifically includes: The terminal displays the second interface in response to the third input.

In a possible implementation, after the terminal sends the first data packet to the target satellite, the method further includes: The terminal receives a second data packet, where the second data packet includes second message content, and the second message content is short message content sent by other user equipment to the terminal through the target satellite. The terminal displays the second message content.

In a possible implementation, after the terminal sends the first data packet to the target satellite, the method further includes: When the terminal does not receive a second data packet within a preset time threshold, the terminal displays request failure prompt information, where the request failure prompt information is used to prompt the user that the first data packet fails to be sent.

In a possible implementation, a service type of a first application layer packet is a mailbox overview query service. Before the terminal displays the first interface, the method further includes: The terminal displays a fifth interface, where the fifth interface includes a first query control. The terminal receives a fourth input for the first query control.

That a terminal displays a first interface specifically includes: The terminal displays the first interface in response to the fourth input.

In a possible implementation, a service type of a first application layer packet is a mailbox overview query service. Before the terminal displays the second interface, the method further includes: The terminal displays a fifth interface, where the fifth interface includes a first query control. The terminal receives a fourth input for the first query control.

That the terminal displays a second interface specifically includes: The terminal displays the second interface in response to the fourth input.

In a possible implementation, after the terminal sends the first data packet to the target satellite, the method further includes: The terminal receives a third data packet, where the third data packet includes information about a quantity of short messages sent by other user equipment to the terminal through the target satellite.

In a possible implementation, after the terminal sends the first data packet to the target satellite, the method further includes: When the terminal does not receive a third data packet within a preset time threshold, the terminal displays query failure prompt information, where the query failure prompt information is used to prompt the user that the first data packet fails to be sent.

In a possible implementation, after the terminal sends the first data packet to the target satellite, the method further includes: The terminal sends a fourth data packet to the target satellite, where a service type of the fourth data packet is a mail message download service.

In a possible implementation, after the terminal sends the fourth data packet to the target satellite, the method further includes: The terminal receives a second data packet, where the second data packet includes second message content, and the second message content is short message content sent by other user equipment to the terminal through the target satellite. The terminal displays the second message content.

In a possible implementation, after the terminal sends the first data packet to the target satellite, the method further includes: The terminal displays sending prompt information, where the sending prompt information is used to prompt the user that the terminal sends the first data packet to the target satellite.

In a possible implementation, when the terminal determines that the radiation direction of the satellite antenna is aligned with the target satellite, the method further includes: The terminal displays alignment prompt information, where the alignment prompt information is used to prompt the user terminal that the radiation direction of the satellite antenna is aligned with the target satellite.

In a possible implementation, the target satellite is a satellite determined by the terminal as a satellite with strongest signal strength from the plurality of geosynchronous orbit satellites.

In a possible implementation, the target satellite is a satellite with a shortest beam center distance in the plurality of geosynchronous orbit satellites. The beam center distance is obtained by the terminal based on longitude and latitude coordinates of the terminal and longitude and latitude coordinates of a beam center of the geosynchronous orbit satellite.

In a possible implementation, the target satellite is a first historical satellite. The first historical satellite is a historical satellite corresponding to a first historical location closest to a current location of the terminal in a database of the terminal.

In a possible implementation, the target satellite is a geosynchronous orbit satellite with a shortest Euclidean distance to the terminal.

In a possible implementation, the pitch angle deviation is a difference between a pitch angle in the radiation direction of the satellite antenna and a pitch angle in the satellite transmission link direction in a ground coordinate system. The azimuth angle deviation is a difference between an azimuth angle in the radiation direction of the satellite antenna and an azimuth angle in the satellite transmission link direction in the ground coordinate system.

In a possible implementation, the azimuth angle and the pitch angle in the satellite transmission link direction are obtained by the terminal based on location information of the terminal and location information of the target satellite.

In a possible implementation, the azimuth angle in the radiation direction of the satellite antenna is determined by the terminal based on an azimuth angle in a reference direction of the terminal and an azimuth angle offset. The pitch angle in the radiation direction of the satellite antenna is determined by the terminal based on a pitch angle in the reference direction of the terminal and a pitch angle offset. The azimuth angle offset is determined by the terminal based on an azimuth angle in the radiation direction of the satellite antenna in a spherical coordinate system of the terminal and an azimuth angle in the reference direction of the terminal in the ground coordinate system. The pitch angle offset is determined by the terminal based on a pitch angle in the radiation direction of the satellite antenna in the spherical coordinate system of the terminal and a pitch angle in the reference direction of the terminal in the ground coordinate system.

In a possible implementation, the azimuth angle and the pitch angle in the reference direction of the terminal in the ground coordinate system are determined by the terminal based on an azimuth angle and a pitch angle in the reference direction of the terminal in a geomagnetic coordinate system and a magnetic declination angle between the geomagnetic coordinate system and the ground coordinate system. The pitch angle and the azimuth angle in the reference direction of the terminal in the geomagnetic coordinate system are determined by the terminal based on geomagnetic data and attitude data that are of the terminal.

In a possible implementation, when the terminal determines that the radiation direction of the satellite antenna is not aligned with the target satellite, the method further includes:

The terminal displays deviation prompt information, where the deviation prompt information is used to prompt the user to adjust the attitude of the terminal, so that the radiation direction of the satellite antenna in the terminal is aligned with the target satellite.

In a possible implementation, that the terminal determines that the radiation direction of the satellite antenna is not aligned with the target satellite specifically includes: When the terminal determines that the azimuth angle deviation is greater than a first threshold or the pitch angle deviation is greater than a second threshold, the terminal determines that the radiation direction of the satellite antenna is not aligned with the target satellite.

In a possible implementation, that the terminal determines that the radiation direction of the satellite antenna is aligned with the target satellite specifically includes: When the azimuth angle deviation is less than or equal to the first threshold and the pitch angle deviation is less than or equal to the second threshold, the terminal determines that the radiation direction of the satellite antenna is aligned with the target satellite.

According to a second aspect, this application provides a terminal, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the terminal is enabled to perform the method according to any one of the possible implementations of the first aspect.

According to a third aspect, this application provides a computer storage medium, including computer instructions. When the computer instructions are run on a terminal, the terminal is enabled to perform the method according to any one of the possible implementations of the first aspect.

According to a fourth aspect, this application provides a computer program product. When the computer program product runs on a computer, the computer is enabled to perform the method according to any one of the possible implementations of the first aspect.

According to a fifth aspect, this application provides a chip or a chip system, applied to a terminal and including a processing circuit and an interface circuit. The interface circuit is configured to receive code instructions and transmit the code instructions to the processing circuit. The processing circuit is configured to run the code instructions to perform the method according to any one of the possible implementations of the first aspect.

## BRIEF DESCRIPTION OF DRAWINGS

FIG. 1 is a schematic diagram of an architecture of a satellite communication system according to an embodiment of this application;

FIG. 2 is a schematic diagram of a hardware structure according to an embodiment of this application;

FIG. 3A to FIG. 3K are schematic diagrams of a group of interfaces according to an embodiment of this application;

FIG. 4A to FIG. 4D are schematic diagrams of another group of interfaces according to an embodiment of this application;

FIG. 5 is a schematic diagram of a deviation interface according to an embodiment of this application;

FIG. 6 is a schematic diagram of a magnetic field calibration interface according to an embodiment of this application;

FIG. 7A and FIG. 7B are schematic diagrams of a group of magnetic field calibration interfaces according to an embodiment of this application;

FIG. 8A and FIG. 8B are a schematic flowchart of a transmission control method in a satellite communication system according to an embodiment of this application;

FIG. 9 is a schematic diagram of an azimuth angle and a pitch angle in a satellite transmission link direction in ground coordinates according to an embodiment of this application;

FIG. 10 is a schematic diagram of an azimuth angle and a pitch angle in a reference direction of a terminal 100 in geomagnetic coordinates according to an embodiment of this application;

FIG. 11 is a schematic diagram of azimuth angles and pitch angles in a reference direction of a terminal 100 respectively in a geomagnetic coordinate system and a ground coordinate system according to an embodiment of this application;

FIG. 12A and FIG. 12B are schematic diagrams of a magnetic declination angle according to an embodiment of this application;

FIG. 13 is a schematic diagram of a spherical coordinate system of a terminal according to an embodiment of this application;

FIG. 14 is a schematic flowchart of a transmission control method in a satellite communication system according to an embodiment of this application;

FIG. 15 is a schematic diagram of a structure of a communication apparatus according to an embodiment of this application;

FIG. 16 is a schematic diagram of a structure of another communication apparatus according to an embodiment of this application;

FIG. 17 is a schematic diagram of a structure of another communication apparatus according to an embodiment of this application; and

FIG. 18 is a schematic diagram of a structure of another communication apparatus according to an embodiment of this application.

## DESCRIPTION OF EMBODIMENTS

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

Embodiments of this application provide a transmission control method in a satellite communication system and a related apparatus. According to the transmission control method in the satellite communication system (also referred to as a transmission control method) provided in this application, a terminal 100 may determine a satellite with a strongest signal from at least one geosynchronous orbit (geosynchronous orbit, GEO) satellite (where the GEO satellite is referred to as a satellite for short below). The satellite with the strongest signal may be referred to as a target satellite. A process in which the terminal 100 determines the target satellite is satellite selection.

After determining the target satellite, the terminal 100 may determine, based on location information of the terminal 100 and location information of the target satellite, a satellite transmission link direction used when the terminal 100 communicates with the target satellite. The satellite transmission link direction is a direction from a location of the terminal 100 to a location of the target satellite. The terminal 100 may further determine a radiation direction of a satellite antenna in the terminal 100 based on geomagnetic data, attitude data, and the like of the terminal 100. Then, the terminal 100 may enable, by using the satellite transmission link direction and the radiation direction of the satellite antenna, the radiation direction of the satellite antenna in the terminal 100 to be aligned with the target satellite. In the description of embodiments of this application, a process in which the terminal 100 aligns with the target satellite is referred to as satellite alignment. The radiation direction of the satellite antenna is a maximum gain direction of a signal when the antenna transmits the signal, and signal strength in this direction is the strongest.

After satellite alignment succeeds, the terminal 100 may send a first data packet to the target satellite along the radiation direction of the satellite antenna. In this way, without relying on an external component, a user can align the radiation direction of the satellite antenna in the terminal 100 with the target satellite, to enhance communication performance between the terminal 100 and the target satellite, and simplify satellite selection and satellite alignment operations performed by the user.

It should be noted that, when the radiation direction of the satellite antenna in the terminal 100 is aligned with the target satellite, and after the terminal 100 sends the first data packet to the target satellite, the target satellite may forward the first data packet to a satellite network device 200.

Because service types of first data packets are different, after receiving the first data packet sent by the terminal 100 through the target satellite, the satellite network device 200 may perform a corresponding operation based on a service type of the first data packet. The service type of the first data packet may include a packet communication service, a mailbox overview query service, and a mail message download service.

Specifically, when the service type of the first data packet is a packet communication service, the first data packet is also referred to as a satellite short message. The first data packet includes first message content entered by the user. After receiving the first data packet, the satellite network device 200 may forward the first message content to another terminal.

When the service type of the first data packet is a mail message download service, the first data packet is also referred to as a service request. After receiving the first data packet sent by the terminal 100 through the target satellite, the satellite network device 200 may send a second data packet to the terminal 100. The second data packet includes second message content, and the second message content is content of a short message sent by another terminal (also referred to as other user equipment) to the terminal 100.

When the service type of the first data packet is a mailbox overview query service, the first data packet is also referred to as an overview request. After receiving the first data packet sent by the terminal 100 through the target satellite, the satellite network device 200 may send a third data packet to the terminal 100. The third data packet includes information about a quantity of short messages sent by another terminal (for example, the terminal 300) to the terminal 100.

In some embodiments, the satellite transmission link direction may be represented as a pitch angle and an azimuth angle of a connection line between the terminal 100 and the target satellite in a ground coordinate system. The radiation direction of the satellite antenna may be represented as a pitch angle and an azimuth angle in the radiation direction of the satellite antenna in the terminal 100 in the ground coordinate system. The terminal 100 may determine, based on the pitch angle and the azimuth angle in the satellite transmission link direction and the pitch angle and the azimuth angle in the radiation direction of the satellite antenna in the ground coordinate system, a pitch angle difference between the pitch angle in the satellite transmission link direction and the pitch angle in the radiation direction of the satellite antenna, and an azimuth angle difference between the azimuth angle in the satellite transmission link direction and the azimuth angle in the radiation direction of the satellite antenna. When the azimuth angle difference is less than or equal to a first threshold and the pitch angle difference is less than or equal to a second threshold, the terminal 100 determines that the radiation direction of the satellite antenna is aligned with the target satellite. When the azimuth angle difference is greater than the first threshold or the pitch angle difference is greater than the second threshold, the terminal 100 determines that the radiation direction of the satellite antenna is not aligned with the target satellite. The terminal 100 may prompt, based on the pitch angle difference and the azimuth angle difference, the user to adjust an attitude of the terminal 100, so that the radiation direction of the satellite antenna is aligned with the target satellite. After the terminal 100 detects an operation of adjusting the attitude of the terminal 100 performed by the user, the terminal 100 may perform the satellite alignment steps again until the terminal 100 determines that the azimuth angle difference is less than/equal to the first threshold and the pitch angle difference is less than/equal to the second threshold, that is, the radiation direction of the satellite antenna in the terminal 100 is aligned with the target satellite.

The following describes a satellite communication system 10 provided in embodiments of this application.

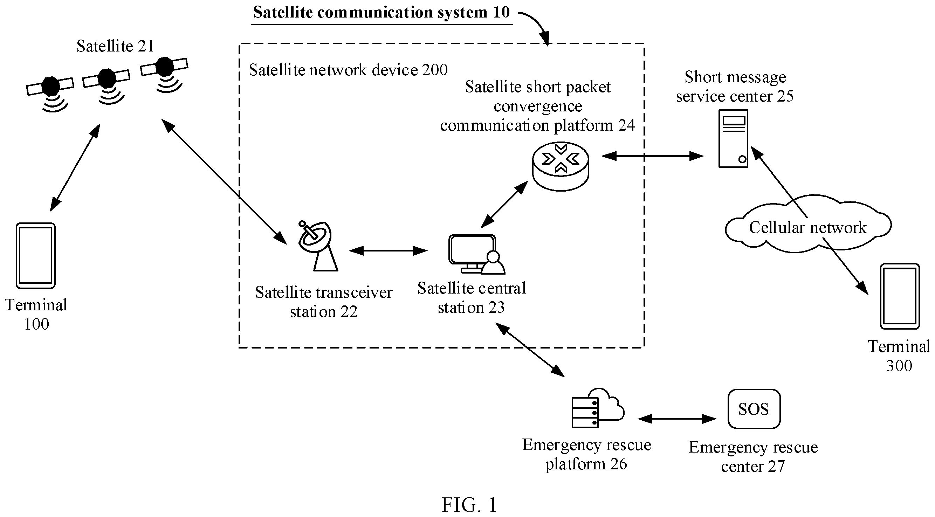

As shown in FIG. 1, the satellite communication system 10 may include but is not limited to a terminal 100, a satellite 21, a satellite network device 200, a short message service center 25, a terminal 300, and the like. Optionally, the satellite communication system 10 may further include an emergency rescue platform 26 and an emergency rescue center 27.

The terminal 100 in a satellite network may send a first data packet to the terminal 300 in a cellular network. Specifically, the terminal 100 may first send the first data packet to the satellite 21. The satellite 21 performs only relay, and may directly forward the first data packet sent by the terminal 100 to the satellite network device 200 on the ground. The satellite network device 200 may parse, according to a communication protocol, the first data packet forwarded by the satellite 21, and forward message content parsed from the first data packet to the short message service center (short message service center, SMSC) 25. The short message service center 25 may forward the message content to the terminal 300 through a conventional cellular communication network. The satellite network device 200 may alternatively send, through the emergency rescue platform 26, a first data packet of an emergency rescue type sent by the terminal 100 to the emergency rescue center 27.

The satellite 21 may include at least one GEO satellite, for example, three GEO satellites.

The terminal 300 (which may be referred to as cellular user equipment) in the cellular network may also send a second data packet to the terminal 100 in the satellite network. The terminal 300 may send a short message to the short message service center 25 through the conventional cellular communication network (also referred to as a cellular network). The short message service center 25 may forward the short message from the terminal 300 to the satellite network device 200. The satellite network device 200 may send the second data packet including message content of the short message of the terminal 300 to the terminal 100 through the satellite 21.

The satellite network device 200 may include a satellite transceiver station 22, a satellite central station 23, and a satellite short packet convergence communication platform 24. The satellite transceiver station 22 may include one or more devices having a sending function and one or more devices having a receiving function, or may include one or more devices having a sending function and a receiving function. This is not limited herein. The satellite transceiver station 22 may be used for a data processing function of the satellite network device 200 at a physical layer (physical layer, PHY). The satellite central station 23 may be used for a data processing function of the satellite network device 200 at a satellite link control layer and a message data convergence protocol (message data convergence protocol, MDCP) layer. The satellite short packet convergence communication platform 24 may be used for a data processing function at an application layer (application layer, APP).

In the satellite communication system 10, a sending device may send data to a receiving device. After receiving a data frame sent by the sending device, the receiving device may send an acknowledgment character (ACK) of an SLC layer to the sending device. The sending device may determine, based on the ACK, whether the receiving device successfully receives the data frame.

In some embodiments, the GEO satellite in the satellite 21 in the satellite communication system 10 may be a BeiDou short packet satellite, and the satellite network device 200 may be a BeiDou network device. In this case, the satellite transceiver station 22 in the satellite network device 200 may be a BeiDou satellite transceiver station, the satellite central station 23 may be a BeiDou central station, and the satellite short packet convergence communication platform 24 may be a BeiDou short packet convergence communication platform. In this case, the satellite network device 200 may parse, according to a BeiDou communication protocol, the first data packet forwarded by the satellite, and forward message content parsed from the first data packet to the short message service center 25. The short message service center 25 may forward the message content to the terminal 300 through the conventional cellular communication network.

The following describes the terminal 100 in the satellite communication system 10.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

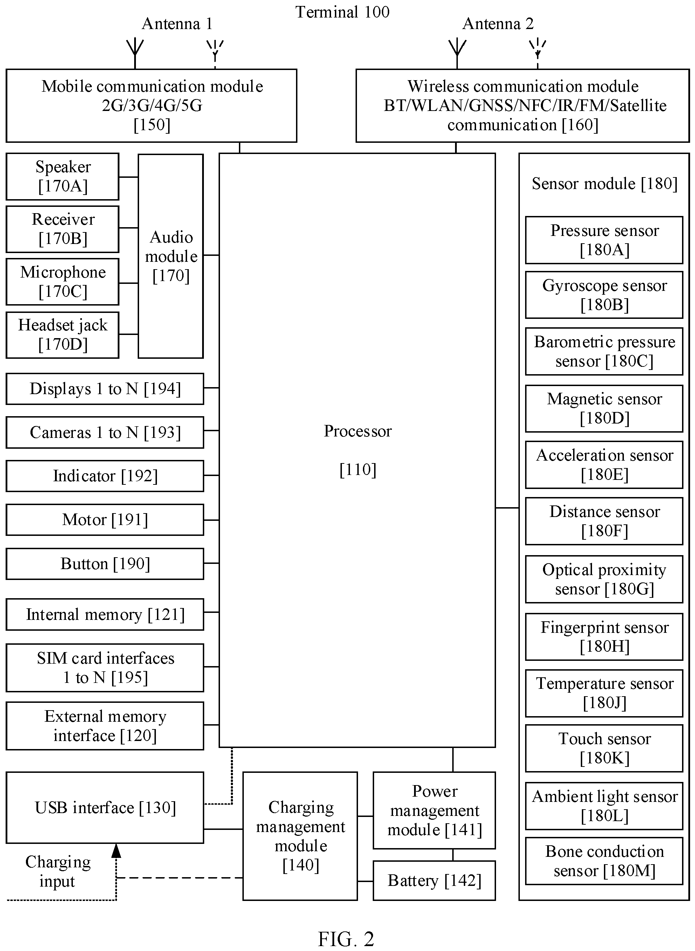

FIG. 2 is a schematic diagram of a hardware structure according to an embodiment of this application.

The following uses the terminal 100 as an example to specifically describe this embodiment. It should be understood that the terminal 100 shown in FIG. 2 is merely an example. The terminal 100 may have more or fewer components than those shown in FIG. 2, or may combine two or more components, or may have different component configurations. Components shown in FIG. 2 may be implemented in hardware including one or more signal processing and/or application-specific integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an illustrated structure in embodiments of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-inter-integrated circuit sound (inter-inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal 100. The processor 110 communicates with the display 194 through the DSI, to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the terminal 100, or may be configured to exchange data between the terminal 100 and a peripheral device, or may be configured to connect to a headset for playing audio through the headset. The interface may be further configured to connect to another electronic device like an AR device.

It may be understood that an interface connection relationship between the modules illustrated in embodiments of the present invention is merely an example for description, and does not constitute a limitation on the structure of the terminal 100. In some other embodiments of this application, the terminal 100 may alternatively use an interface connection manner different from that in the foregoing embodiments, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the terminal 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module may be configured to communicate with the satellite network device 200. For example, in a BeiDou communication system, the satellite network device 200 is a BeiDou network device, and the satellite communication module may communicate with the BeiDou network device. The satellite communication module may support short packet transmission with the BeiDou network device.

In some embodiments, the antenna 1 and the mobile communication module 150 in the terminal 100 are coupled, and the antenna 2 and the wireless communication module 160 in the terminal 100 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The terminal 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through a lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal 100 may be implemented through the NPU, for example, image recognition, facial recognition, speech recognition, and text understanding.

The external memory interface 120 may be used to connect to an external memory card, for example, a micro SD card, to extend a storage capability of the terminal 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the terminal 100. The internal memory 121 may include a program storage area and a data storage area. The program storage area may store an operating system, an application required by at least one function (for example, a voice playing function or an image playing function), and the like. The data storage area may store data (such as audio data and an address book) created during use of the terminal 100, and the like. In addition, the internal memory 121 may include a high-speed random access memory, or may include a nonvolatile memory, for example, at least one magnetic disk storage device, a flash memory, or a universal flash storage (universal flash storage, UFS).

The terminal 100 may implement an audio function like music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an electrical audio signal into a sound signal. When a call is answered or speech information is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through a mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on the change of the capacitance. When a touch operation is performed on the display 194, the terminal 100 detects intensity of the touch operation by using the pressure sensor 180A. The terminal 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion attitude of the terminal 100. In some embodiments, angular velocities of the terminal 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyroscope sensor 180B may also be used in a navigation scenario or a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect opening and closing of a flip cover based on the magnetic sensor 180D. Further, automatic unlocking upon opening of the flip cover and a like feature are set based on a detected opening or closing state of the flip cover.

The magnetic sensor 180D also includes a magnetometer. The terminal 100 may obtain geomagnetic information of a location of the terminal 100 by using the magnetometer. Specifically, the terminal 100 may detect included angles between a reference direction of the terminal 100 and four directions in a magnetic north coordinate system by using the magnetometer, to determine an orientation of the reference direction of the terminal 100 in a geomagnetic coordinate system. The reference direction of the terminal 100 may be a direction parallel to the display of the terminal 100 and perpendicular to a top frame of the terminal 100.

The acceleration sensor 180E may detect magnitudes of accelerations of the terminal 100 in various directions (usually on three axes). A magnitude and a direction of gravity may be detected when the terminal 100 is still. The acceleration sensor 180E may be further configured to identify an attitude of the electronic device, and is used in switching between a landscape mode and a portrait mode, a pedometer, or a like application.

The distance sensor 180F is configured to measure a distance. The terminal 100 may measure the distance in an infrared manner or a laser manner. In some embodiments, in a photographing scenario, the terminal 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The terminal 100 emits infrared light by using the light-emitting diode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy based on the temperature detected by the temperature sensor 180J. For example, when the temperature reported by the temperature sensor 180J exceeds a temperature threshold, the terminal 100 lowers performance of a processor located near the temperature sensor 180J, to reduce power consumption for thermal protection. In some other embodiments, when the temperature is lower than another temperature threshold, the terminal 100 heats the battery 142, to avoid abnormal shutdown of the terminal 100 caused by a low temperature. In some other embodiments, when the temperature is lower than still another temperature threshold, the terminal 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external memory card. The terminal 100 interacts with a network by using the SIM card, to implement functions such as conversation and data communication. In some embodiments, the terminal 100 uses an eSIM, that is, an embedded SIM card. The eSIM card may be embedded into the terminal 100, and cannot be separated from the terminal 100.

The following specifically describes the transmission control method provided in embodiments of this application with reference to an application scenario.

In a possible implementation, a terminal 100 cannot use another network resource (for example, a cellular network) other than a satellite network. To be specific, when the terminal 100 is in a no-signal state, for example, when the terminal 100 is located in an area in which no mobile communication is covered, or mobile communication cannot be covered, or a communication system is damaged, for example, an ocean, a desert, a grassland, or a no-man's land, after a radiation direction of a satellite antenna is aligned with a target satellite, the terminal 100 may send a first data packet to the target satellite along the radiation direction of the satellite antenna. The terminal 100 may communicate with another terminal (for example, a terminal 300) through the target satellite, that is, send a satellite short message to the another terminal, or receive a short message sent by the another terminal.

Specifically, after receiving an input of sending the first data packet by the user, the terminal 100 may perform a satellite selection operation in response to the input, to determine the target satellite. Then, the terminal 100 may calculate a pitch angle difference between a pitch angle in a satellite transmission link direction and a pitch angle in the radiation direction of the satellite antenna, and an azimuth angle difference between an azimuth angle in the satellite transmission link direction and an azimuth angle in the radiation direction of the satellite antenna. When the pitch angle difference is greater than a first threshold or the azimuth angle difference is greater than a second threshold, the terminal 100 may display deviation prompt information on an interface. The deviation prompt information may prompt the user to adjust an attitude of the terminal 100. After the terminal 100 receives an input of adjusting the attitude, in response to the input, the terminal 100 may perform the satellite alignment process again, and recalculate the pitch angle difference between the pitch angle in the satellite transmission link direction and the pitch angle in the radiation direction of the satellite antenna, and the azimuth angle difference between the azimuth angle in the satellite transmission link direction and the azimuth angle in the radiation direction of the satellite antenna. The terminal 100 may detect, in real time, an attitude of the terminal 100 adjusted by the user, and calculate the azimuth angle deviation and the pitch angle deviation in real time, until the azimuth angle difference is less than or equal to the first threshold and the pitch angle difference is less than or equal to the second threshold. When the azimuth angle difference is less than/equal to the first threshold and the pitch angle difference is less than/equal to the second threshold, the terminal 100 may display alignment prompt information on the interface, and send the first data packet to the target satellite. The alignment prompt information may prompt the user that the radiation direction of the satellite antenna in the terminal 100 is aligned with the target satellite. After the terminal 100 sends the first data packet to the target satellite along the radiation direction of the satellite antenna that is aligned with the target satellite, the terminal 100 may display sending prompt information. The sending prompt information may prompt the user that the terminal 100 sends the first data packet to the target terminal.

It may be understood that, after receiving the first data packet sent by the terminal 100, the target satellite may send the first data packet to a satellite network device 200. When the first data packet is a satellite short message, the satellite network device 200 may send first message content of the first data packet to a target terminal through a cellular network/satellite. When the first data packet is a service request, the satellite network device 200 may send a second data packet to the terminal 100 through the target satellite. When the first data packet is an overview request, the satellite network device 200 may send a third data packet to the terminal 100 through the target satellite.

It may be understood that, in addition to text prompt information or picture text information, the prompt information on the interface may alternatively be of another type, for example, animation prompt information, or may be a combination of any at least two of the foregoing types. This is not limited in this application.

The following describes schematic diagrams of a group of interfaces in which the terminal 100 sends the satellite short message in the satellite network according to an embodiment of this application.

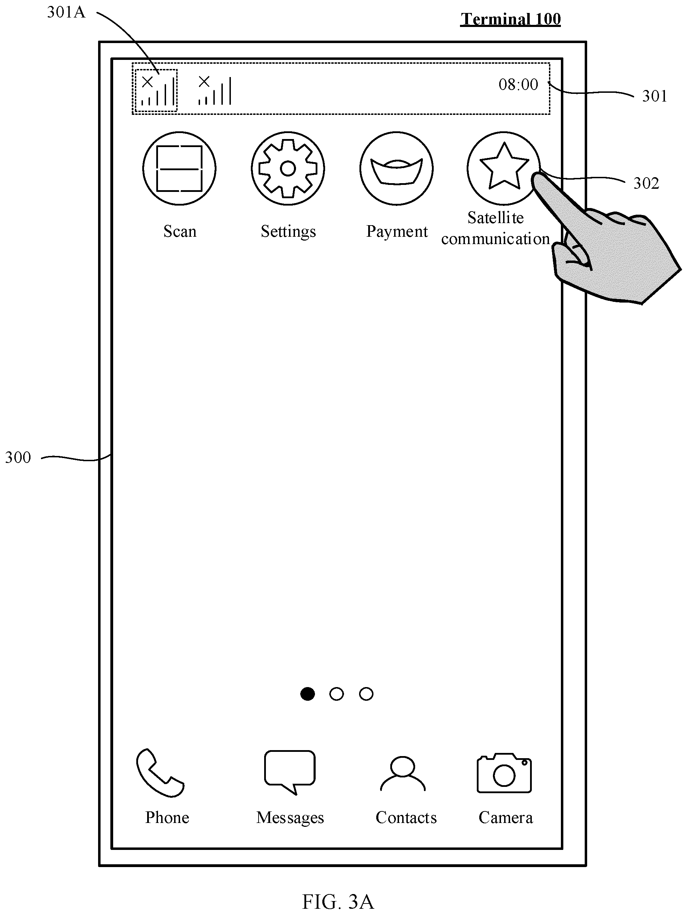

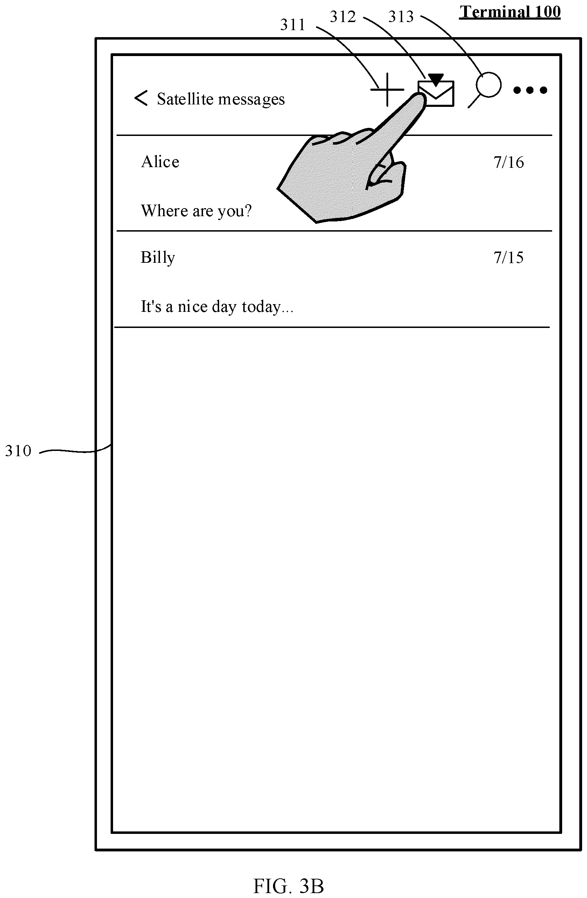

For example, as shown in FIG. 3A, the terminal 100 displays a desktop 300. The desktop 300 may include a plurality of application icons, for example, a satellite communication application icon 302. The satellite communication application icon 302 may be used to trigger display of an interface of a satellite communication application (for example, a satellite message interface 310 shown in FIG. 3B). The terminal 100 may send, to another terminal by using the satellite communication application, the first data packet that includes the first message content input by the user, or may receive the second data packet/third data packet sent by the satellite network device 200. A status bar 301 may be further displayed at the top of the desktop 300. A prompt icon 301A may be displayed in the status bar. The prompt icon 301A indicates that the terminal 100 is disconnected from the cellular network. In this case, the terminal 100 is in a no-cellular-signal state.

The terminal 100 receives an input (for example, a single tap) of the user for the satellite communication application icon 302, and in response to the input, the terminal 100 may display the satellite message interface 310 shown in FIG. 3B.

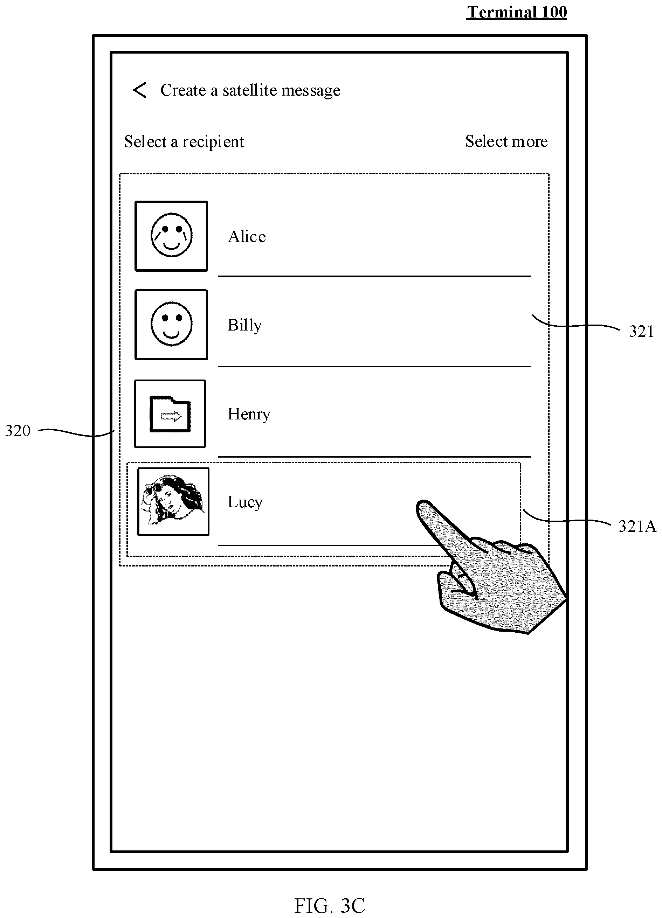

As shown in FIG. 3B, the terminal 100 may display the satellite message interface 310. The satellite message interface 310 may include a creation control 311. The creation control 311 is configured to trigger display of an interface for creating a satellite short message (for example, an information creation interface 320 shown in FIG. 3C). The satellite message interface 310 may further include a receiving control 312. The receiving control 312 is configured to trigger the terminal 100 to download the second data packet that includes second message content and that is sent by another terminal. The satellite message interface 310 may further include a query control 313. The query control 313 is configured to trigger the terminal 100 to query information about a quantity of short messages sent by another terminal to the terminal 100.

The terminal 100 receives an input (for example, a single tap) of the user for the creation control 311, and in response to the input, the terminal 100 may display the information creation interface 320 shown in FIG. 3C. The information creation interface 320 may display a contact display area 321. The contact display area 321 may display a plurality of contact icons, for example, a contact icon 321A. The contact icon may be used to trigger display of an information editing interface (for example, an information editing interface 330) for communication with a contact corresponding to the contact icon.

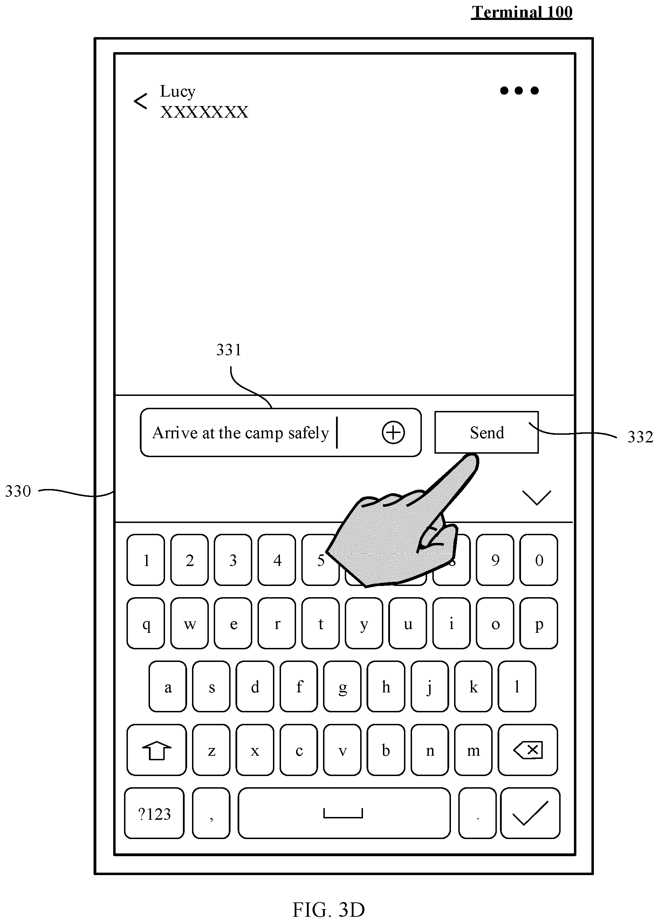

The terminal 100 receives an input (for example, a single tap) of the user for the contact icon 321A, and in response to the input, the terminal 100 may display the information editing interface 330 of a contact "Lucy" corresponding to the contact icon 321A. As shown in FIG. 3D, the communication interface 330 may include an editing bar 331, a "Send" control 332, and the like. The editing bar 331 may be used to display content of a satellite short message edited by the user. For example, the editing bar 331 may display the content of the satellite short message, for example, "Arrive at the camp safely". The "Send" control 331 may trigger the terminal 100 to send, to the satellite network device 200, the satellite short message that includes the content displayed in the editing bar 331.

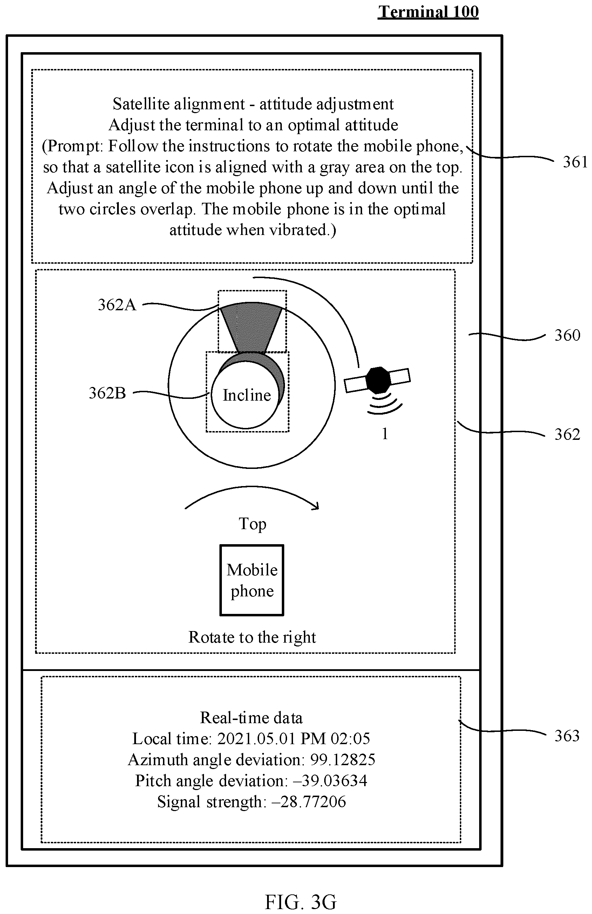

In some embodiments, after receiving an input (for example, a single tap) for the "Send" control 331, in response to the input, the terminal 100 further performs satellite selection and satellite alignment operations before sending the satellite short message to the satellite network device 200. In this way, when the radiation direction of the satellite antenna is aligned with the target satellite, the terminal 100 can send the satellite short message to the target satellite, and send the first data packet to the satellite network device 200 through the target satellite. When performing the satellite selection operation, the terminal 100 may display a satellite selection interface. The satellite selection interface may include a plurality of satellites. After determining the target satellite from the plurality of satellites, the terminal 100 may display a mark. The mark may indicate that the target satellite is selected. When performing the satellite alignment operation, the terminal 100 may display a satellite alignment interface. The satellite alignment interface may include the target satellite, the azimuth angle deviation, and the pitch angle deviation. Optionally, the terminal 100 may perform the satellite selection operation in a background. When receiving an input (for example, a single tap) for the "Send" control 331, the terminal 100 displays, in response to the input, a satellite alignment interface 360 shown in FIG. 3G.

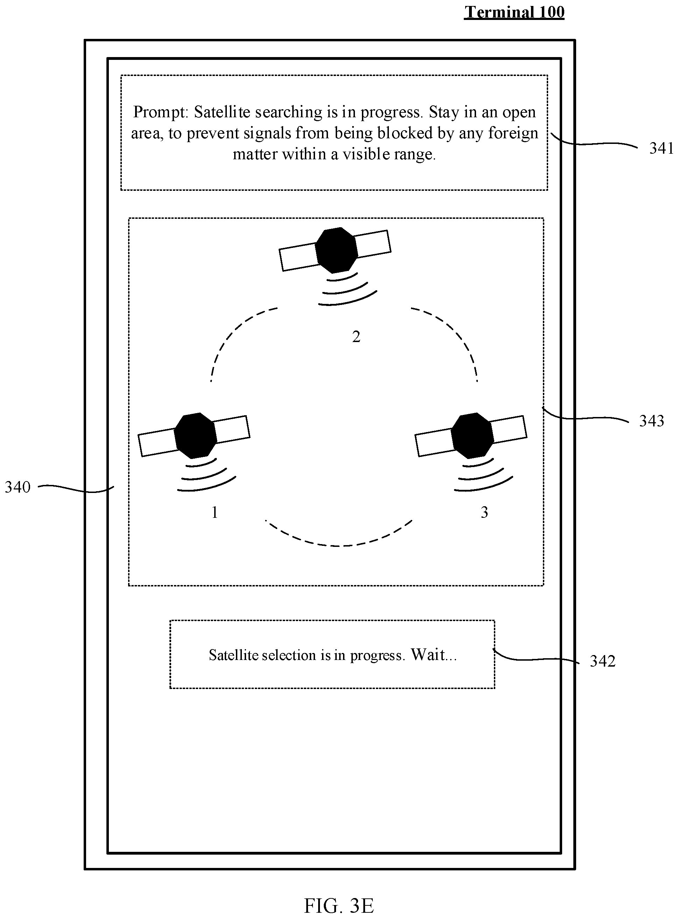

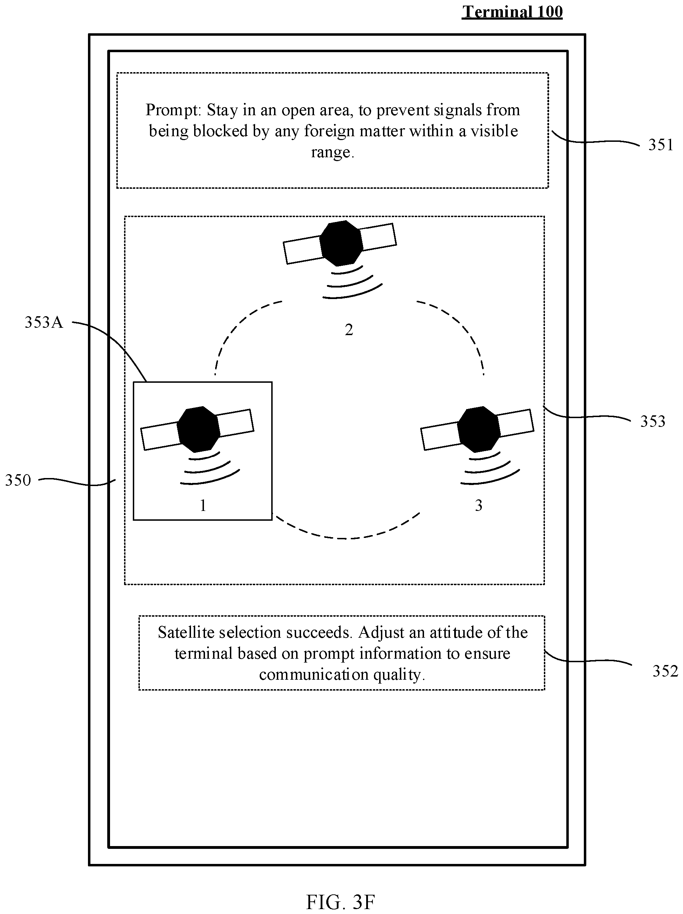

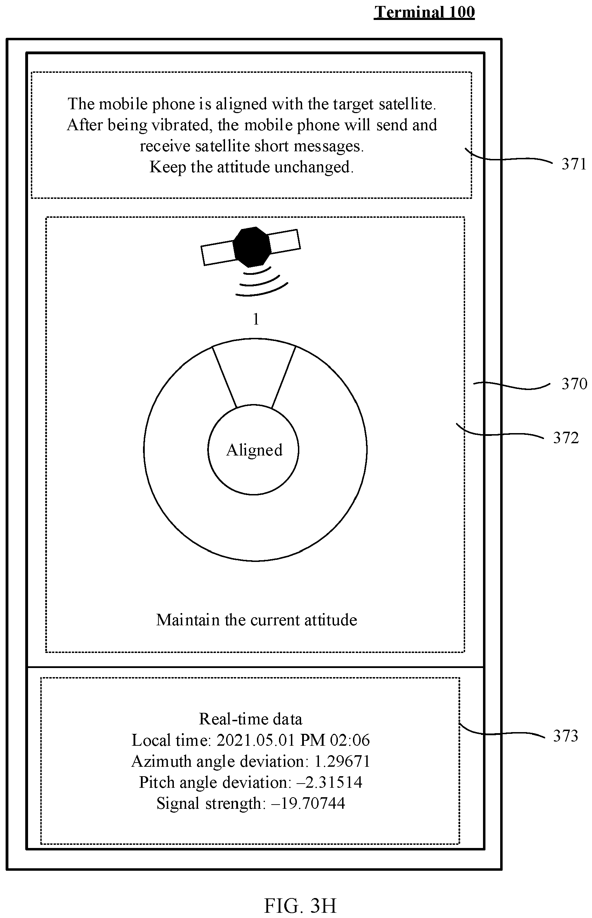

For example, for schematic diagrams of a group of interfaces related to the satellite selection operation, refer to the following descriptions of FIG. 3E and FIG. 3F. For schematic diagrams of a group of interfaces related to the satellite alignment operation, refer to the following descriptions of FIG. 3G and FIG. 3H.

The terminal 100 may display a satellite selection interface 340 shown in FIG. 3E in response to the input of the user for the "Send" control 331. The satellite selection interface 340 may include prompt information 341, prompt information 342, and a satellite icon display area 343. The prompt information 341 and the prompt information 342 may prompt the user that the terminal 100 is performing the satellite selection operation, and prompt the user to keep the terminal 100 in an open area, so that a satellite signal currently received by the terminal 100 is not blocked by an obstacle (for example, a mountain), and a success rate of sending the first data packet to the target satellite is improved. The prompt information 341, the prompt information 342, and the prompt information 343 may include but are not limited to text prompt information, picture prompt information, animation prompt information, and the like. For example, the prompt information 341 may be text prompt information: "Satellite searching is in progress. Stay in an open area, to prevent signals from being blocked by any foreign matter within a visible range". For example, the prompt information 342 may be text prompt information: "Satellite selection is in progress. Wait". The satellite icon display area 343 may be used to display a satellite icon, number information, and the like corresponding to a satellite found by the terminal 100. For example, the satellite icon display area 343 may display a satellite number and a satellite icon of a satellite "1", a satellite number and a satellite icon of a satellite "2", and a satellite number and a satellite icon of a satellite "3".

After determining, through satellite selection, a satellite with a strongest signal from the found satellites, the terminal 100 may display a first mark. The first mark may indicate that the target satellite is selected. Optionally, the first mark may further be used to prompt the user of a satellite number and a satellite icon of the selected target satellite.

For example, after selecting the target satellite, the terminal 100 may display a satellite selection interface 350 shown in FIG. 3F below. As shown in FIG. 3F, the satellite selection interface 350 may include prompt information 351, prompt information 352, and a satellite icon display area 353. The prompt information 351, the prompt information 352, and the satellite icon display area 353 may prompt the user that the current satellite selection is completed, and to stay in an open area, so that the terminal 100 is not blocked by an obstacle when sending and receiving satellite signals, and a success rate of sending the first data packet to the satellite network device 200 is improved. The prompt information 351 and the prompt information 352 may be text prompt information. For example, the prompt information 351 may be text prompt information: "Stay in an open area, to prevent signals from being blocked by any foreign matter within a visible range". The prompt information 352 may be text prompt information: "Satellite selection succeeds. Adjust an attitude of the terminal based on prompt information to ensure communication quality". The satellite icon display area 353 may include satellite icon and number information corresponding to the satellite found by the terminal 100. The satellite icon display area 353 may further include a mark 353A. The terminal 100 may identify the selected target satellite based on the mark. The mark may be a color mark, a graphic mark, or the like. For example, the mark 353A is a graphic mark. The mark 353A may prompt the user that the satellite "1" is the target satellite selected by the terminal 100. When the mark is a color mark, the color mark may be a color displayed when target satellite is changed, so that a color of the target satellite is different from a color of another satellite, to prompt the user to identify the target satellite.

In a possible implementation, the terminal 100 may receive an input of the user for a satellite icon or number, and in response to the input, the terminal 100 determines, as the target satellite, a satellite corresponding to the satellite icon or number. For example, the terminal 100 may determine, in response to an input (for example, a single tap) of the user for the satellite icon of the satellite "1" shown in FIG. 3E, the satellite "1" as the target satellite in response to the input, and the terminal 100 may further display the satellite selection interface 350 shown in FIG. 3F.

After performing the satellite selection operation to obtain the target satellite, the terminal 100 may perform the satellite alignment operation, and the terminal 100 may calculate and display in real time the pitch angle deviation and the azimuth angle deviation that are between the radiation direction of the satellite antenna in the terminal 100 and the satellite transmission link direction. When the terminal 100 determines, based on the pitch angle deviation and the azimuth angle deviation, that the radiation direction of the satellite antenna is not aligned with the target satellite, the terminal 100 may display deviation prompt information. The deviation prompt information is used to prompt the user to adjust the attitude of the terminal 100, so that the radiation direction of the satellite antenna can be aligned with the target satellite. When the terminal 100 determines, based on the pitch angle deviation and the azimuth angle deviation, that the radiation direction of the satellite antenna is aligned with the target satellite, the terminal 100 may display alignment prompt information. The alignment prompt information is used to prompt the user that the radiation direction of the satellite antenna is aligned with the target satellite. It should be noted that the pitch angle deviation and the azimuth angle deviation may be displayed in a form of a text, a picture, an animation, or the like. This is not limited in embodiments of this application.

For example, after displaying the satellite selection interface 350, the terminal 100 may display the satellite alignment interface 360 shown in FIG. 3G.

As shown in FIG. 3G, the satellite alignment interface 360 may include prompt information 361, prompt information 362, and prompt information 363. The prompt information 361, the prompt information 362, and the prompt information 363 may prompt the user to adjust the terminal 100 in a direction of reducing the azimuth angle deviation and the pitch angle deviation based on the prompt, so that the radiation direction of the satellite antenna in the terminal 100 is aligned with the target satellite. The prompt information 361 and the prompt information 363 may be text prompt information, and the prompt information 362 may include text prompt information and picture prompt information. For example, the prompt information 361 may be: "Adjust the terminal to an optimal attitude (Prompt: Follow the instructions to rotate the mobile phone, so that the satellite icon is aligned with a gray area on the top. Adjust an angle of the mobile phone up and down until the two circles overlap. The mobile phone is in the optimal attitude when vibrated)". The "gray area on the top" is content shown in an area 362A in the prompt information 362, and the "two circles" is content shown in an area 362B in the prompt information 362. The prompt information 362 may further include a manner in which the user adjusts the attitude of the terminal. For example, text prompt information "Rotate the mobile phone to the right" in the prompt information 362 may prompt the user to rotate the terminal to a specified direction (for example, to a right-hand direction). The prompt information 363 may include real-time data of the terminal 100 during satellite alignment, for example, one or more of a local time, the azimuth angle deviation, the pitch angle deviation, and the signal strength. The local time is a time of a city in which the terminal 100 is currently located. The azimuth angle deviation is the azimuth angle difference between the azimuth angle in the satellite transmission link direction and the azimuth angle in the radiation direction of the satellite antenna. The pitch angle deviation is the pitch angle difference between the pitch angle in the satellite transmission link direction and the pitch angle in the radiation direction of the satellite antenna. The signal strength is strength of a signal that is of the target satellite and that is currently received by the terminal 100.

When the azimuth angle difference is greater than the first threshold or the pitch angle difference is greater than the second threshold, after receiving the input of the user for adjusting the attitude of the terminal 100, the terminal 100 may perform the satellite alignment operation again in response to the input, and recalculate the pitch angle difference and the azimuth angle difference. The terminal 100 may update values of the pitch angle deviation and the azimuth angle deviation in the prompt information 363 displayed on the satellite alignment interface 360. The satellite alignment process may be cyclically performed until the pitch angle difference is less than/equal to the second threshold and the azimuth angle difference is less than/equal to the first threshold. When the pitch angle difference is less than/equal to the second threshold and the azimuth angle difference is less than/equal to the first threshold, the terminal 100 may display a satellite alignment interface 370 shown in FIG. 3H.

As shown in FIG. 3H, the satellite alignment interface 370 is a satellite alignment success interface provided by the terminal 100. The interface 370 includes prompt information 371, prompt information 372, and prompt information 373. The prompt information 371 may prompt the user that satellite alignment is completed, but the current attitude needs to be kept, so that sending of the first data packet is not affected. The prompt information 373 may prompt the user of real-time data of the terminal 100 (for example, the strength of the signal received from the target satellite and the azimuth angle deviation). The prompt information 371 and the prompt information 372 may be text prompt information. The prompt information 371 may be: "The mobile phone is aligned with the target satellite. After being vibrated, the mobile phone will send and receive satellite short messages. Keep the attitude unchanged". The prompt information 372 may include picture prompt information and text prompt information. The prompt information 372 includes a schematic diagram in which the radiation direction of the satellite antenna is aligned with the target satellite after satellite alignment succeeds.

After satellite alignment succeeds, the terminal 100 may send the first data packet to the target satellite, and relay the first data packet through the target satellite, to transmit the first data packet to the satellite network device 200. Then, the satellite network device 200 transmits the first data packet to another terminal through a cellular network device 400/a satellite 21.

In a possible implementation, the terminal 100 may send the first data packet to the target satellite after satellite selection and satellite alignment. After sending the first data packet to the target satellite, the terminal 100 may display sending prompt information. The sending prompt information may prompt the user that the terminal 100 sends the first data packet to the target terminal.

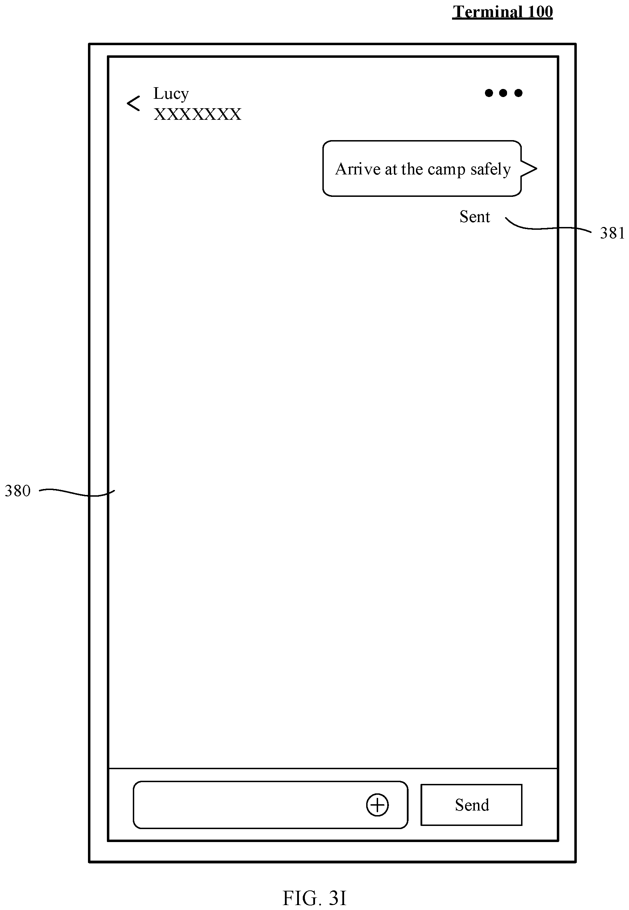

For example, after sending the first data packet to the target satellite, the terminal 100 may display an information details interface 380 shown in FIG. 3I. The information details interface 380 is an interface that is provided by the terminal and that displays the first message content of the first data packet. The information details interface 380 includes prompt information 381. The prompt information indicates that the terminal 100 sends the first data packet to another terminal. The prompt information 381 may be text prompt information, for example, "Sent".

In a possible implementation, after receiving the first data packet sent by the terminal 100, the satellite network device 200 may parse the first data packet, and send, to the terminal 100, an application layer return notification (also referred to as a first application layer return notification) that includes a result obtained through parsing of the first data packet. The terminal 100 may determine a sending status of the first data packet based on the application layer return notification.

Optionally, when the terminal 100 determines that the application layer return notification indicates that the first data packet fails to be sent, the terminal 100 may display failure prompt information. The failure prompt information may prompt the user that the first data packet fails to be sent. For example, the failure prompt information may be text prompt information: "Sending failed". When the terminal 100 determines that the application layer return notification indicates that the first data packet is successfully sent, the terminal 100 may display success prompt information. The success prompt information may prompt the user that the first data packet is successfully sent. For example, the success prompt information may be text prompt information: "Sending succeeds".

In some embodiments, if the terminal 100 does not receive an application layer return notification within a preset time threshold (for example, 1 minute) after sending the first data packet, the terminal 100 may display the failure prompt information, or continue to display the sending prompt information.

In a possible implementation, in a process of sending the first data packet, in addition to sending the first data packet to the target satellite, the terminal 100 may further send a fourth data packet to the target satellite. A service type of the fourth data packet is mail message downloading. After receiving the first data packet and the fourth data packet, the target satellite may send the first data packet and the fourth data packet to the satellite network device 200. The satellite network device 200 may send a second data packet to the terminal 100 through the target satellite based on the fourth data packet. The second data packet is a second data packet sent by the another terminal to the terminal 100 before the first data packet is sent to the another terminal when the terminal 100 is in the no-signal state. In this way, the terminal 100 may receive the second data packet of the another terminal while sending the first data packet.

Optionally, the terminal 100 may display receiving prompt information after sending the fourth data packet. The receiving prompt information is used to prompt the user that the terminal 100 is receiving a short message of another terminal through the target satellite. For example, the receiving prompt information may be text prompt information: "Receiving a satellite short message. Do not move the mobile phone".

After successfully receiving the second data packet, the terminal 100 may display second message content in the second data packet.

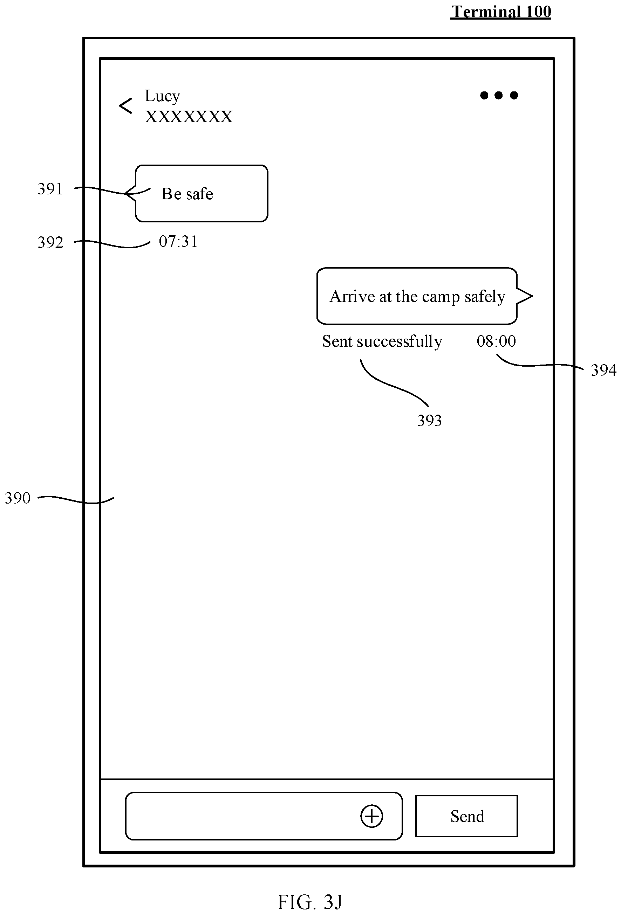

For example, as shown in FIG. 3J, after sending the first data packet and receiving the second data packet and the application layer return notification that indicates that the first data packet is successfully received, the terminal 100 may display an information details interface 390. The information details interface 390 may include an information box 391, prompt information 392, prompt information 393, and prompt information 394. The information box 391 may display the content of the second data packet. The prompt information 392 may be used to display a sending time at which the another terminal sends the second data packet to the terminal 100, for example, "07:31". The prompt information 394 may prompt the user of a time at which the terminal 100 sends the first data packet, for example, "08:00". After receiving the application layer return notification that indicates that the sending is successful, the terminal 100 may display the prompt information 393. The prompt information 393 may prompt the user that the first data packet is successfully sent.

In some embodiments, after the terminal 100 sends a service request (for example, the fourth data packet) to the target satellite in the background, and the terminal 100 does not receive the second data packet within the preset time threshold (for example, 1 minute), the terminal 100 may determine that the terminal 100 fails to send the service request to the target satellite. The terminal 100 may display request failure prompt information. The request failure prompt information is used to prompt the user that the short message from the another terminal fails to be received.

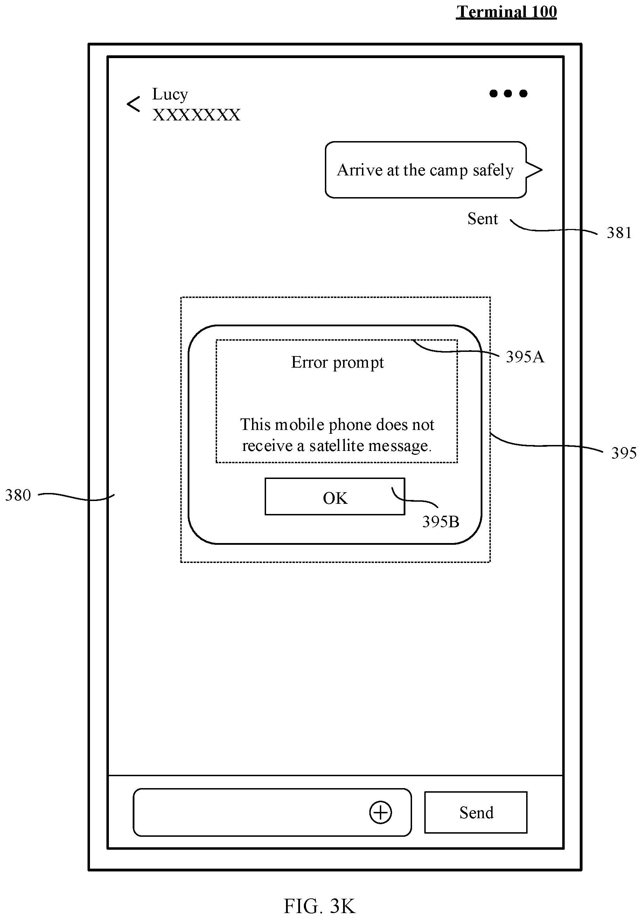

For example, the terminal 100 may display, on the information details interface 380 shown in FIG. 3I, an error prompt box 395 shown in FIG. 3K. The error prompt box 395 may include an error prompt 395A and an "OK" control 395B. The error prompt 395A may prompt the user that the terminal 100 does not receive the second data packet. The "OK" control 395B may be used to trigger the terminal 100 to cancel displaying the error prompt box 397.

Optionally, when displaying the failure prompt information, the terminal 100 may further display a re-sending control. The re-sending control may be used to trigger the terminal 100 to re-perform the satellite selection and satellite alignment operations, and re-send the service request to the target satellite after the satellite alignment succeeds. For example, after receiving an input of the user for the "OK" control 395B, the terminal 100 may perform the satellite selection and satellite alignment operations in response to the input, and re-send the fourth data packet after the satellite alignment succeeds.

In some embodiments, after the terminal 100 does not receive the second data packet within the preset time threshold, the terminal 100 may re-perform the satellite selection and satellite alignment operations, and re-send the fourth data packet to the target satellite.

In a possible implementation, the terminal 100 may perform the satellite selection and satellite alignment operations in response to the input of the user for receiving the second data packet, and send, to the target satellite along the radiation direction of the satellite antenna after satellite alignment, the first data packet (namely, the service request) whose service type is mail message downloading. The target satellite may send the service request to the satellite network device 200, and the satellite network device 200 may send the second data packet to the terminal 100 through the target satellite based on the service request. The second data packet includes the content of the short message sent by the another terminal to the terminal 100. In this way, because the radiation direction of the satellite antenna in the terminal 100 is aligned with the target satellite, the signal of the target satellite is stronger, and the first data packet can be sent and the second data packet can be received with higher quality.

The following describes schematic diagrams of a group of interfaces in which the terminal 100 receives the first data packet sent by the another terminal.

After receiving the input (for example, a single tap) of the user for the receiving control 312 shown in FIG. 3B, the terminal 100 may perform the satellite selection and satellite alignment operations in response to the input, so that when the radiation direction of the satellite antenna is aligned with the target satellite, the terminal 100 can receive the second data packet sent by the another terminal to the terminal 100. Example interfaces related to satellite selection and satellite alignment performed by the terminal 100 may be interfaces in FIG. 3E to FIG. 3H. For specific descriptions, refer to the embodiments shown in FIG. 3E to FIG. 3H. Details are not described herein again.

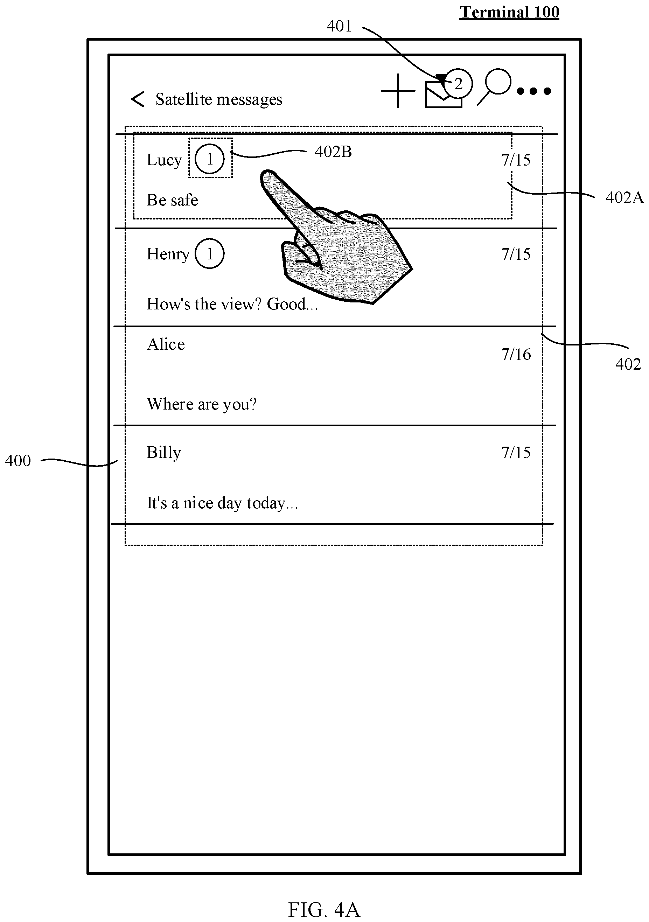

For example, after satellite alignment succeeds, the terminal 100 may receive, through the target satellite, the second data packet sent by the another terminal, and display a satellite message interface 400 shown in FIG. 4A.

As shown in FIG. 4A, the satellite message interface 400 may display a mail prompt 401 and a contact display area 402. The mail prompt 401 may prompt the user that the second data packet of the another terminal is received. The mail prompt 401 may further include information about a quantity of received second data packets. The quantity information may prompt the user of a quantity of received new second data packets. The contact display area 402 may include one or more contact options, for example, a contact option 402A. The contact option may display a name of a contact, a summary of a message sent by the contact, and the like. The contact option may be used to trigger the terminal 100 to display a mail editing interface corresponding to the contact. The contact option may include a new message prompt, for example, a new message prompt 402B. The new message prompt may prompt the user that a new message sent by the contact corresponding to the contact option is received, and further indicates a quantity of received new messages. For example, the contact option 402A may include the new message prompt 402B. The new message prompt 402B may indicate that the terminal 100 receives one first data packet from a contact "Lucy", and summary content of the first data packet is "Be safe".

After receiving an input (for example, a single tap) of the user for the contact option 402A, the terminal 100 may display, in response to the input, an information editing interface 410 of the contact "Lucy" corresponding to the contact option 402A.

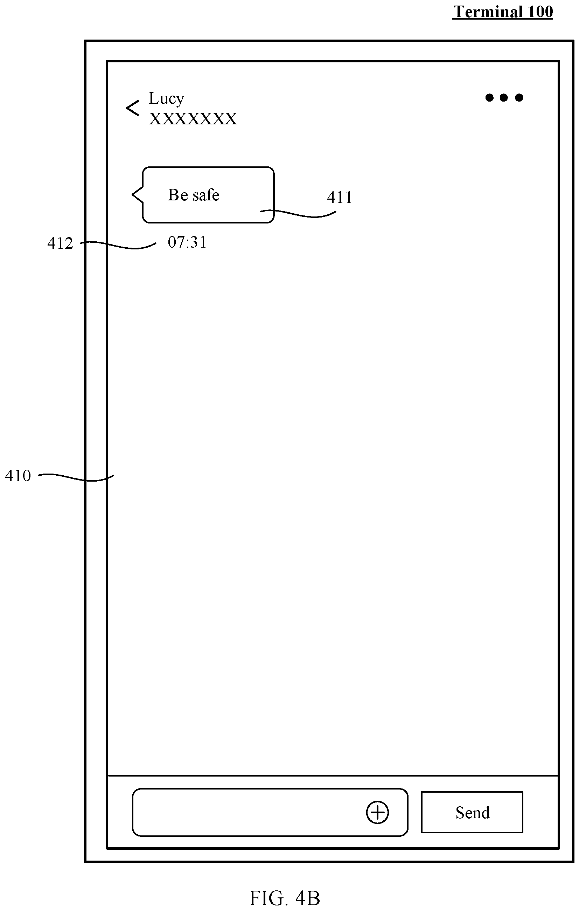

As shown in FIG. 4B, the information editing interface 410 may include an information box 411 and prompt information 412. The information box 391 may display the content of the received second data packet, for example, "Be safe". The prompt information 412 indicates a time at which the another device sends the second data packet to the terminal 100, for example, "07:31".

It should be understood that, in addition to the manner described based on the interfaces in FIG. 4A and FIG. 4B, the terminal 100 may alternatively receive the second data packet in a manner in FIG. 3J. For detailed content, refer to the embodiment shown in FIG. 3J. Details are not described herein again.

In a possible implementation, after sending the first data packet to the target satellite, the terminal 100 may display the sending prompt information. The sending prompt information may prompt the user that the terminal 100 sends the service request to the target satellite, in other words, prompt the user that a short message sent by another terminal is being received.

In some embodiments, after the terminal 100 sends the service request to the target satellite, the terminal 100 does not receive the second data packet within the preset time threshold, and may display the request failure prompt information.

Optionally, when displaying the failure prompt information, the terminal 100 may further display a re-sending control. The re-sending control may be used to trigger the terminal 100 to re-perform the satellite selection and satellite alignment operations, and re-send the first data packet to the target satellite after satellite alignment succeeds.

In some embodiments, after the terminal 100 does not receive the second data packet within the preset time threshold, the terminal 100 may re-perform the satellite selection and satellite alignment operations, and re-send the first data packet to the target satellite.

In a possible implementation, the terminal 100 may perform the satellite selection and satellite alignment operations in response to an input of the user for querying a mailbox overview, and send, to the target satellite along the radiation direction of the satellite antenna after satellite alignment, the first data packet (namely, an overview request) whose service type is mailbox overview query. The target satellite may send the overview request to the satellite network device 200, and the satellite network device 200 may send the third data packet to the terminal 100 through the target satellite based on the overview request. The third data packet includes the quantity of short messages sent by the another terminal to the terminal 100. In this way, because the radiation direction of the satellite antenna in the terminal 100 is aligned with the target satellite, the signal of the target satellite is stronger, and the first data packet can be sent and the third data packet can be received with higher quality.

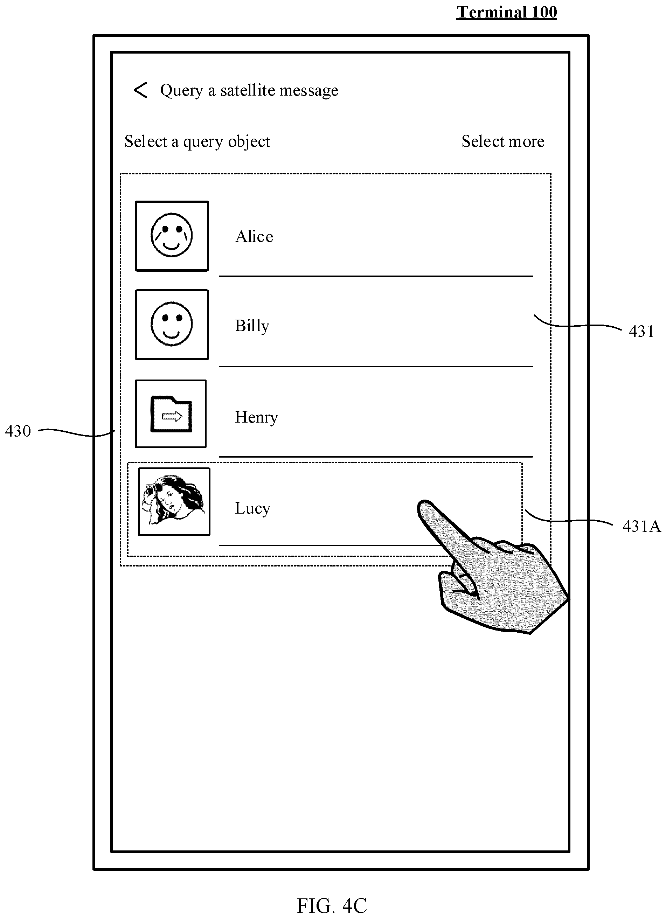

For example, after receiving the input (for example, a single tap) for the query control 313 shown in FIG. 3B, the terminal 100 may display a query interface 430 shown in FIG. 4C in response to the input.

The query interface 430 may include a contact display area 431. The contact display area 431 may include one or more contact options, for example, a contact option 431A. The contact option may display a name or the like of a contact, and the contact option may be used to trigger the terminal 100 to query a quantity of short messages sent by a contact corresponding to the contact option to the terminal 100. The terminal 100 may receive an input of the user for the contact option 431A, and display, in response to the input, the interfaces shown in FIG. 3E to FIG. 3H.

After the terminal 100 is aligned with the target satellite, the terminal 100 may send an overview query to the target satellite. The target satellite may forward the overview query to the satellite network device 200. The satellite network device 200 may search for a quantity of short messages sent by the contact "Lucy" to the terminal 100 based on an ID number of the contact "Lucy" in the overview query. The satellite network device 200 may send the third data packet including the quantity to the terminal 100 through the target satellite.

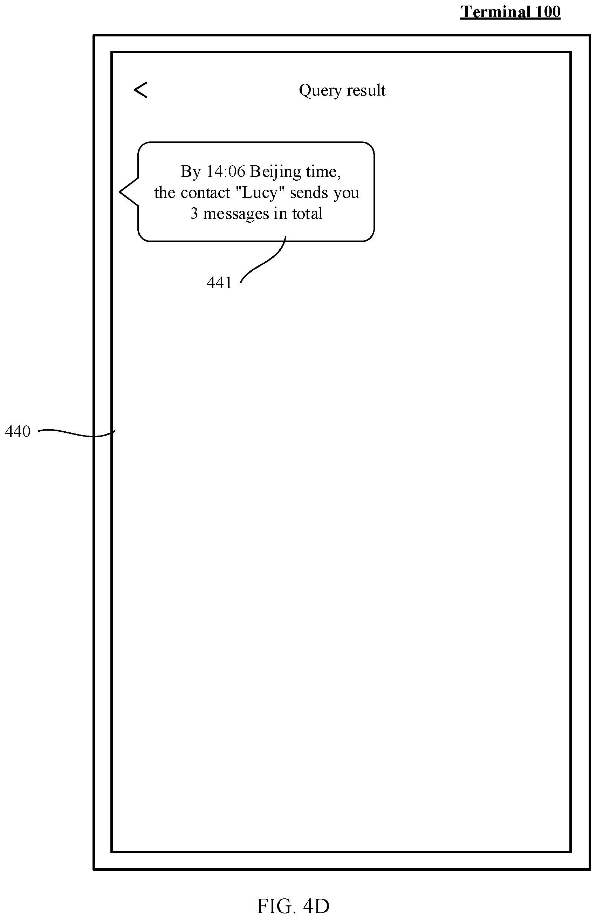

After receiving the third data packet, the terminal 100 may display a query interface 440 shown in FIG. 4D. The query interface 440 may be used to display a result of the mailbox overview query. In this case, the query interface 440 may include a query result box 441. The query result box 441 may prompt the user of a quantity of short messages sent by a specific contact to the terminal 100. Optionally, the query interface 441 may further include a query time. The query time may indicate a time at which the user obtains the mailbox overview result. For example, the query result box 441 may display a text message: "By 14:06 Beijing time, the contact 'Lucy' sends you three messages in total".

The satellite selection and satellite alignment operations are performed, so that the first data packet sent by the another terminal to the terminal 100 can be received when the radiation direction of the satellite antenna is aligned with the target satellite. Example interfaces related to satellite selection and satellite alignment performed by the terminal 100 may be interfaces in FIG. 3E to FIG. 3H. For specific descriptions, refer to the embodiments shown in FIG. 3E to FIG. 3H. Details are not described herein again.

For example, after satellite alignment succeeds, the terminal 100 may receive, through the target satellite, the first data packet sent by the another terminal, and display a satellite message interface 400 shown in FIG. 4A.

In a possible implementation, after sending the first data packet to the target satellite, the terminal 100 may display the sending prompt information. The sending prompt information may prompt the user that the terminal 100 sends the service request to the target satellite, in other words, prompt the user that the mailbox overview result is being received.

In some embodiments, after the terminal 100 sends the service request to the target satellite, the terminal 100 does not receive the third data packet within the preset time threshold, and may display query failure prompt information. The query failure prompt information is used to prompt the user that the query fails. Optionally, when displaying the failure prompt information, the terminal 100 may further display a re-sending control. The re-sending control may be used to trigger the terminal 100 to re-perform the satellite selection and satellite alignment operations, and re-send the first data packet to the target satellite after satellite alignment succeeds.

In some embodiments, after the terminal 100 does not receive the third data packet within the preset time threshold, the terminal 100 may re-perform the satellite selection and satellite alignment operations, and re-send the first data packet to the target satellite.

In a possible implementation, the terminal 100 may perform the satellite selection operation in the background. For example, after receiving the input of the user for the "Send" control 332 shown in FIG. 3D, the terminal 100 may display, in response to the input, the satellite alignment interface 360 shown in FIG. 3G. For another example, after receiving the input of the user for the receiving control 312 shown in FIG. 3B, the terminal 100 may display, in response to the input, the satellite alignment interface 360 shown in FIG. 3G.

In a possible implementation, after satellite alignment succeeds, in a process of sending/receiving the first data packet by the terminal 100, because the attitude of the terminal 100 changes, the radiation direction of the satellite antenna is not aligned with the target satellite, and the terminal 100 may display the deviation prompt information. The deviation prompt information is used to prompt the user that the attitude of the terminal 100 deviates from the target satellite, and prompt the user to readjust the attitude of the terminal 100, so that the radiation direction of the satellite antenna is aligned with the target satellite. It should be noted that, if the radiation direction of the satellite antenna deviates from the target satellite, signal strength of the target satellite becomes smaller, and the first data packet may fail to be sent, or the second data packet may fail to be received, or the third data packet may fail to be received. The terminal 100 may prompt the user that the terminal deviates from a direction of the target satellite, so that the user adjusts the attitude of the terminal 100 again, to enable the radiation direction of the satellite antenna to be re-aligned with the target satellite. In this way, a sending and receiving success rate of the terminal 100 can be improved.

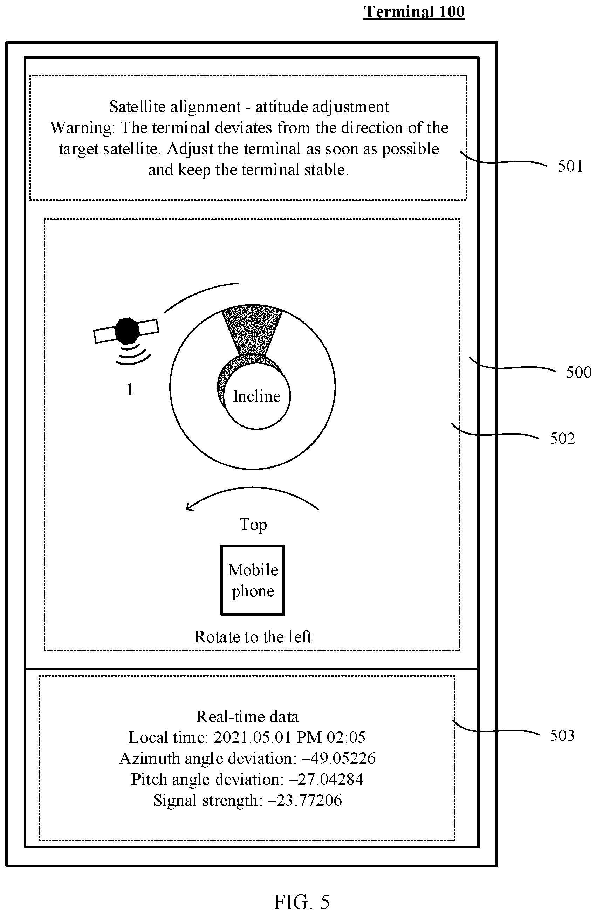

For example, the terminal 100 may display a satellite alignment interface 500 shown in FIG. 5. The satellite alignment interface 500 is a satellite alignment interface when the terminal 100 deviates from the direction of the target satellite after satellite alignment succeeds. The satellite alignment interface 500 includes prompt information 501, prompt information 502, and prompt information 503. The prompt information 501 may prompt the user that the terminal 100 deviates from the direction of the target satellite, and the user needs to adjust the attitude of the terminal 100 until the radiation direction of the satellite antenna in the terminal 100 is aligned with the target satellite. The prompt information 501 may be text prompt information, for example, "The terminal deviates from the direction of the target satellite. Adjust the terminal as soon as possible and keep the terminal stable". For descriptions of the prompt information 502 and the prompt information 503, refer to the descriptions of the prompt information 362 and the prompt information 363 in FIG. 3C. Details are not described herein again.

When the terminal 100 detects that the pitch angle difference is less than/equal to the second threshold and the azimuth angle difference is less than/equal to the first threshold, the terminal 100 may display the satellite alignment interface 370 shown in FIG. 3H.

In a possible implementation, the terminal 100 may obtain, through a sensor (for example, a magnetometer), geomagnetic data of a location in which the terminal 100 is located, and may obtain the azimuth angle in the radiation direction of the satellite antenna in the terminal 100 based on the geomagnetic data. When magnetic field strength of the location in which the terminal 100 is located is greater than preset magnetic field strength (for example, 200 uT), the terminal 100 cannot obtain accurate geomagnetic data. In other words, the terminal 100 cannot determine the azimuth angle of the terminal 100. When the magnetic field strength of the location of the terminal 100 is greater than the preset magnetic field strength, the terminal 100 may display calibration prompt information. The calibration prompt information may prompt the user to perform magnetic field calibration, so that the terminal 100 can obtain accurate geomagnetic data and determine the azimuth angle of the terminal 100. In this way, the terminal 100 can accurately obtain, through magnetic field calibration, the geomagnetic data for calculating the azimuth angle of the terminal 100.

In some embodiments, the terminal 100 may prompt, based on the calibration prompt information, the user to perform the magnetic field calibration by drawing a number "8". A type of the calibration prompt information may be an animation, a text, a voice, or the like.

It should be noted that drawing the number "8" for magnetic field calibration is due to magnetic field rotation of the magnetometer relative to the earth when the number "8" is drawn. If the magnetometer has an error, for example, outputs of three axes are different with a same magnetic field input, these points are not on a positive spherical but are on an approximate ellipsoid. When there are enough measuring points, the ellipsoid can be fitted, to obtain a coefficient of the ellipsoid, to calculate a measurement error of the magnetometer. Then, the magnetometer may be calibrated through compensation.

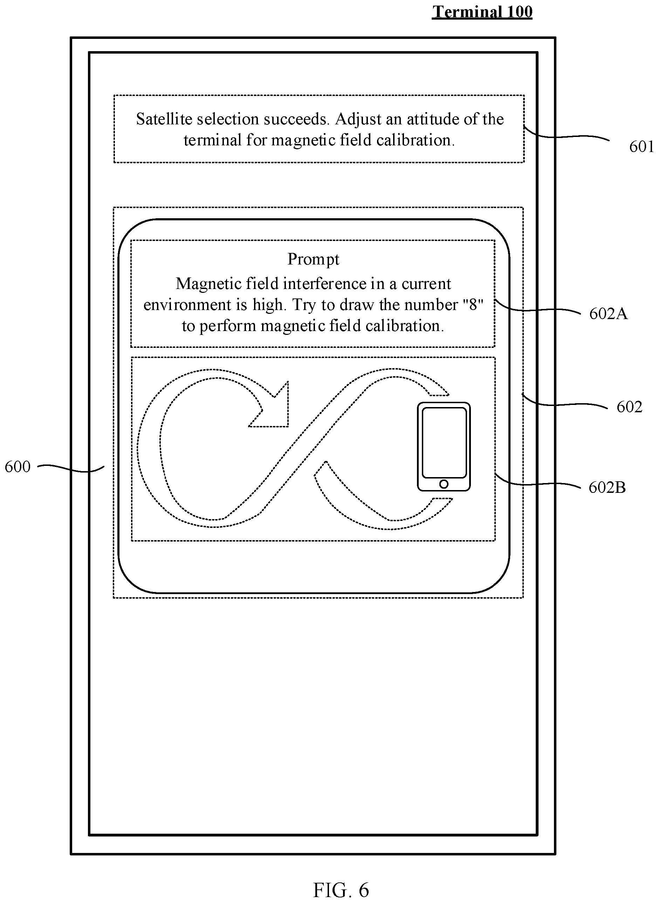

After satellite selection succeeds, the terminal 100 may obtain geomagnetic data of a current location through the sensor. Before the terminal 100 obtains the geomagnetic data (for example, after the terminal 100 displays the satellite selection interface 350 shown in FIG. 3F and before the terminal 100 displays the satellite alignment interface 360 shown in FIG. 3G), the terminal 100 may detect the magnetic field strength. When the magnetic field strength is greater than the preset magnetic field strength, the terminal 100 may display a calibration interface 600 shown in FIG. 6.

For example, as shown in FIG. 6, the calibration interface 600 is a magnetic field calibration interface provided by the terminal 100. The calibration interface 600 includes calibration prompt information 601 and calibration prompt information 602. The calibration prompt information 601 is used to prompt the user to perform magnetic field calibration. For example, the calibration prompt information 601 is text prompt information: "Stay in an open area, to prevent signals from being blocked by any foreign matter within a visible range". The calibration prompt information 602 is used to prompt the user to perform magnetic field calibration by drawing the number "8". For example, the prompt information 602 may include a prompt text 602A: "Magnetic field interference in a current environment is high. Try to draw the number '8' to perform magnetic field calibration" and a prompt picture 602B: an example of drawing the number "8".

After detecting an input of the user for drawing the number "8" to perform magnetic field calibration, the terminal 100 may display the satellite alignment interface 360 shown in FIG. 3G.

Optionally, when the terminal 100 is in the satellite network, the terminal 100 may perform a magnetic field calibration operation in the background as the user moves. In this way, the terminal 100 may complete the magnetic field calibration before the user sends the first data packet.

In some embodiments, the terminal 100 may prompt, based on the calibration prompt information, the user to perform the magnetic field calibration by changing a satellite message sending location. A type of the calibration prompt information may be an animation, a text, a voice, or the like.

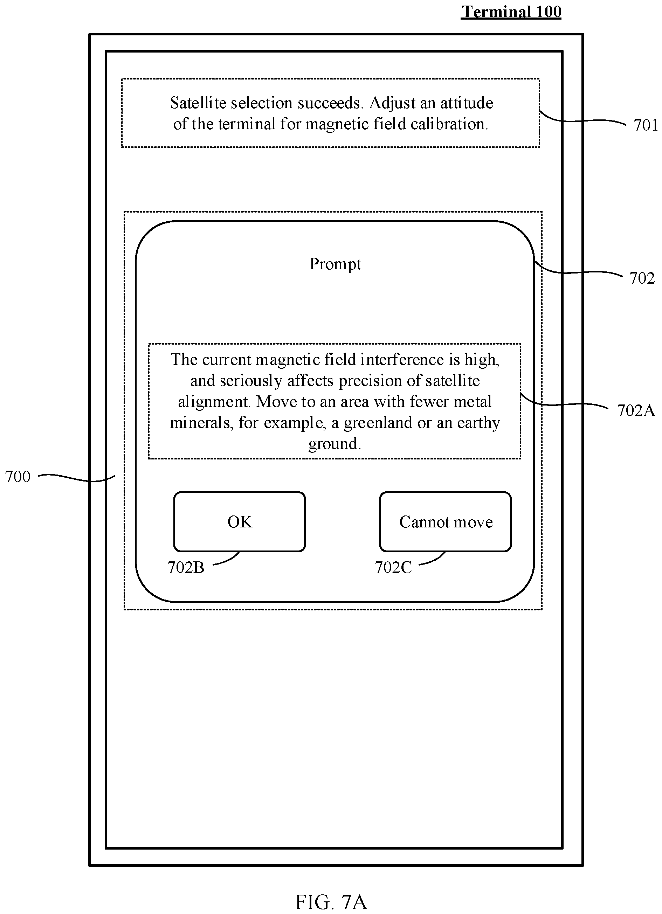

After satellite selection succeeds, the terminal 100 may obtain the geomagnetic data of the current location through the sensor. Before the terminal 100 obtains the geomagnetic data (for example, after the terminal 100 displays the satellite selection interface 350 shown in FIG. 3F and before the terminal 100 displays the satellite alignment interface 360 shown in FIG. 3G), the terminal 100 may detect the magnetic field strength. When the magnetic field strength is greater than the preset magnetic field strength (for example, 200 uT), the terminal 100 may display a calibration interface 700 shown in FIG. 7A.

As shown in FIG. 7A, the calibration interface 700 may include prompt information 701 and a prompt box 702. For descriptions of the prompt information 701, refer to the embodiment shown in FIG. 6. Details are not described herein again. The prompt box 702 may include prompt information 702A, an "OK" control 702B, and a "Cannot move" control 702C. The prompt information 702A is used to prompt the user that the current location has high magnetic field interference and needs to be changed to a location (for example, a greenland or an earthy ground) with low magnetic field interference to send the first data packet. For example, the prompt information 702A is text prompt information: "The current magnetic field interference is high, and seriously affects precision of satellite alignment. Move to an area with fewer metal minerals, for example, a greenland or an earthy ground".

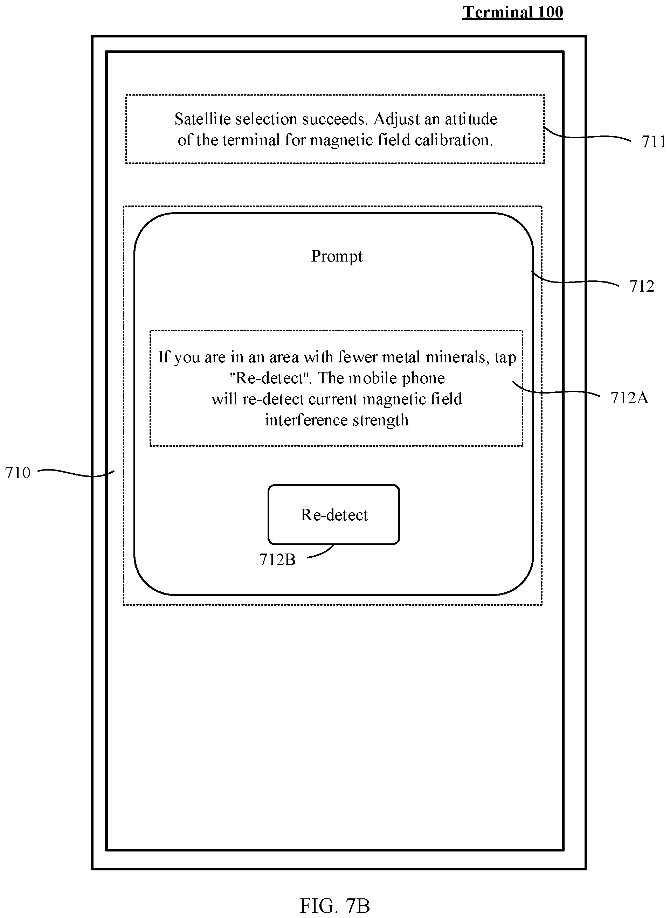

The "Cannot move" control 702C may be configured to trigger the terminal 100 to directly perform operations of satellite alignment and sending the first data packet. The "OK" control 702B may be configured to trigger the terminal to display an interface on which magnetic field strength can be re-detected. For example, after receiving an input (for example, a single tap) for the "Movement available" control 703B, the terminal 100 may display, in response to the input, a calibration interface 710 shown in FIG. 7B.

As shown in FIG. 7B, the calibration interface 710 may include prompt information 711 and a prompt box 712. For detailed descriptions of the prompt information 711, refer to the embodiment shown in FIG. 6. Details are not described herein again. The prompt box 712 may prompt the user to re-detect the magnetic field strength after the user changes to an area away from metal minerals. The prompt box 712 may include prompt information 712A and a "Re-detect" control 712B. The prompt information 712A is: "If you are in an area with fewer metal minerals, tap "Re-detect". The mobile phone will re-detect current magnetic field interference strength". The prompt information is used to prompt the user to tap the "Re-detect" control 712B after the user moves to the area with few metal minerals, to trigger the terminal 100 to re-detect the surrounding magnetic field strength. After receiving an input (for example, a single tap) for the "Re-detect" control 712B, the terminal 100 may re-detect, in response to the input, the surrounding magnetic field strength. When the magnetic field strength is greater than the preset magnetic field strength, the calibration interface 700 shown in FIG. 7A is displayed. When the magnetic field strength is less than/equal to the preset magnetic field strength, the satellite alignment interface 360 shown in FIG. 3G is displayed, to prompt the user to adjust the attitude of the terminal 100 to complete satellite alignment.

In a possible implementation, when the geographical location of the terminal 100 cannot be changed, the terminal 100 may determine the azimuth angle and the pitch angle in the radiation direction of the satellite antenna in the terminal 100 without obtaining the geomagnetic data. For example, the terminal 100 may obtain, by using a GNSS, an azimuth angle and a pitch angle in a radiation direction of a GNSS antenna in the terminal 100 in ground coordinates. The terminal 100 may obtain, based on the azimuth angle and the pitch angle in the radiation direction of the GNSS antenna, the azimuth angle and the pitch angle in the radiation direction of the satellite antenna, and aligns the radiation direction of the satellite antenna with the target satellite.

For example, after detecting the input of the user for the "Cannot move" control 702C shown in FIG. 7A, the terminal 100 obtains, in response to the input by using the GNSS satellite, the azimuth angle and the pitch angle in the radiation direction of the GNSS antenna in the terminal 100. The terminal 100 may obtain, based on the azimuth angle and the pitch angle in the radiation direction of the GNSS antenna, the azimuth angle and the pitch angle in the radiation direction of the satellite antenna in the terminal 100, calculate an azimuth angle difference between the azimuth angle in the radiation direction of the satellite antenna and the azimuth angle in the satellite transmission link direction, and calculate a pitch angle difference between the pitch angle in the radiation direction of the satellite antenna and the pitch angle in the satellite transmission link direction. When the azimuth angle difference is greater than the first threshold or the pitch angle difference is greater than the second threshold, the terminal 100 may display the satellite alignment interface 360 shown in FIG. 3G. When the azimuth angle difference is less than or equal to the first threshold and the pitch angle difference is less than or equal to the second threshold, the terminal 100 may display the satellite alignment interface 370 shown in FIG. 3H.

It may be understood that all the interfaces and descriptions such as display sequences and display content are examples, and should not constitute a limitation on embodiments of this application. In another embodiment, there may be another implementation. For example, display of the interface 340 in FIG. 3E may not be triggered by using the "Send" control 331 on the interface 330 in FIG. 3D, but a satellite communication control displayed in a drop-down notification bar. The satellite communication control may trigger the terminal 100 to perform satellite selection, to display the interface 340 in FIG. 3E. In this way, steps of satellite selection and satellite alignment may be performed by the terminal 100 at any moment before the "Send" control 331 is tapped. For example, before the satellite communication application 302 is opened, an operation (for example, a single tap) performed by the user on the satellite communication control in the drop-down notification bar is detected. In response to the operation, the terminal 100 may perform satellite selection, display the interface 340 in FIG. 3E until satellite selection is completed, and perform satellite alignment. After satellite alignment succeeds, the terminal 100 may send the satellite message through the satellite communication application 302. For another example, when the terminal may send the satellite message through a satellite, the terminal may further display an icon in the status bar. The icon indicates that the satellite message may be sent through the satellite.

The following describes a specific procedure of a transmission control method in a satellite communication system provided in embodiments of this application.

In the transmission control method provided in embodiments of this application, the terminal 100 may determine the target satellite from at least one satellite according to a preset rule. Then, the azimuth angle and the pitch angle in the satellite transmission link direction are determined based on the location information of the terminal 100 and the location information of the target satellite. In addition, the azimuth angle and the pitch angle in the radiation direction of the satellite antenna in the terminal 100 in the ground coordinate system may be determined based on data such as geomagnetic data and attitude data of the terminal 100. Satellite alignment is performed by using the azimuth angle difference between the two azimuth angles and the pitch angle difference between the two pitch angles, so that the radiation direction of the satellite antenna is aligned with the target satellite (that is, the radiation direction of the satellite antenna is the same as the satellite transmission link direction).

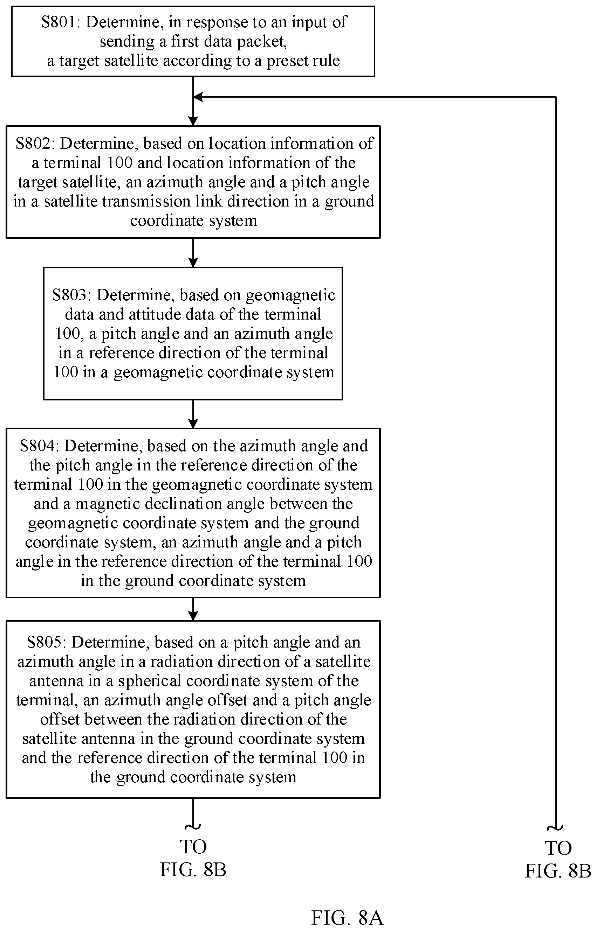

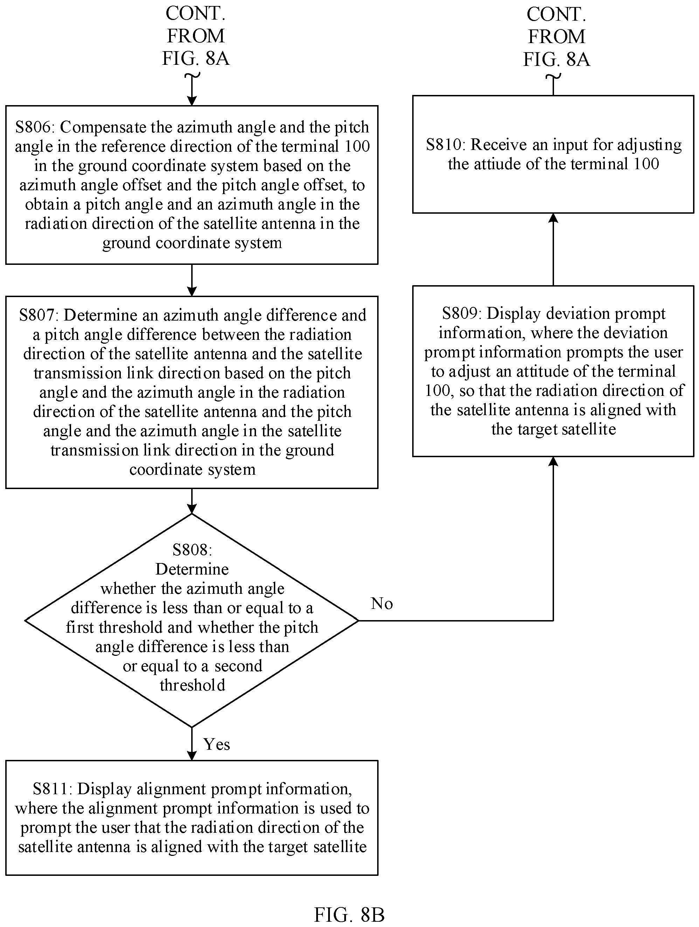

FIG. 8A and FIG. 8B are a schematic flowchart of a transmission control method according to an embodiment of this application.

A specific procedure of the transmission control method provided in this embodiment of this application is as follows.

S801: A terminal 100 determines, in response to an input of sending a first data packet, a target satellite according to a preset rule.

The first input may be an input that triggers the terminal 100 to send the first data packet to another terminal, for example, may be the input for the sending control on the interface 330 shown in FIG. 3D. Alternatively, the input may be an input for receiving the second data packet sent by the another terminal to the terminal 100, for example, may be the input for the receiving control on the interface 310 shown in FIG. 3B.

Optionally, the first input may be any input before the terminal 100 sends the first data packet to the another terminal, or any input before the terminal 100 receives the first data packet sent by the another terminal to the terminal 100. For example, the first input may be the input for opening the satellite communication application 301 on the interface 300 shown in FIG. 3A.

A process in which the terminal 100 determines the target satellite according to the preset rule is as follows.

Manner 1: When the terminal 100 can obtain signal strength of a satellite, the terminal 100 can obtain signal strength of each of the at least one detected satellite, and the terminal 100 can determine a satellite with strongest signal strength in the at least one satellite as the target satellite.

When the terminal 100 cannot obtain the signal strength of the satellite, the terminal 100 may determine the target satellite in the following Manner 2 to Manner 4.

Manner 2: The terminal 100 may calculate, based on current longitude and latitude coordinates of the terminal 100 and longitude and latitude coordinates of a beam center of each satellite, a distance between the terminal 100 and the beam center of each satellite, and select a satellite corresponding to a beam center closest to the terminal 100 as the target satellite. The current longitude and latitude coordinates of the terminal 100 may be obtained by using a GNSS. A longitude and a latitude of the beam center of each satellite may be pre-stored in the terminal 100.

When the terminal 100 does not pre-store the longitude and the latitude of the beam center of each satellite involved in Manner 2, the target satellite may be determined in Manner 3 and Manner 4.

Manner 3: The terminal 100 may obtain historical information about satellite selection from a database, query, based on the historical information, a historical location closest to a current location, and then determine a target satellite based on a historical satellite corresponding to the historical location.

The database may include a correspondence between a historical location and a historical satellite. In the database, the location can be marked with the longitude and latitude information of the historical location, and the satellite can be marked with a mark of the historical satellite. One historical location corresponds to one historical satellite. The historical satellite may be a satellite used in the latest communication at the historical location. For example, Table 1 shows a possible database example. Specifically:

**Table 1**

| Historical location | Historical satellite |
|---|---|
| (longitude A, latitude A) | Satellite 1 |
| (longitude B, latitude B) | Satellite 2 |
| (longitude C, latitude C) | Satellite 3 |
| ... | ... |

As shown in Table 1, the database may store a correspondence between a historical location and a historical satellite. For example, in a historical location corresponding to the longitude and latitude of (longitude A, dimension A), a satellite that used in the latest communication is the satellite 1.

In a possible implementation, the terminal 100 may perform calculation based on the current longitude and latitude coordinates of the terminal 100 and longitudes and latitudes corresponding to all historical locations in the database, determine a distance between the current location and any historical location, and determine a historical satellite corresponding to a historical location with a shortest distance as the target satellite.

In another possible implementation, the terminal 100 may set a preset distance threshold, and starts to perform calculation from a longitude and a latitude corresponding to a first historical location. When an obtained distance between a longitude and a latitude corresponding to a historical location and the longitude and latitude of the current location is less than the preset distance threshold, the historical location is a historical location with a shortest distance from the current location. A historical satellite corresponding to the historical location is the target satellite.

In some embodiments, the database of the terminal 100 stores a plurality of historical satellites corresponding to one historical location, and a communication performance indicator of a satellite when the terminal 100 sends the first data packet to the plurality of historical satellites. The terminal 100 may query, based on the historical information, a historical location closest to the current location, determine all historical satellites corresponding to the historical location, and determine a historical satellite with best communication performance as the target satellite from the historical satellites.

It may be understood that, in addition to recording a correspondence between a historical location and a historical satellite, a correspondence between a historical satellite and a communication performance indicator may be further recorded in the database. The communication performance indicator may include a carrier-to-noise ratio and the like. It should be noted that one historical location in the database may correspond to at least one historical satellite, and the at least one historical satellite may be any satellite that communicates with the terminal 100 at the historical location. Alternatively, the at least one historical satellite corresponding to a historical location stored in the database may be any satellite that communicates with the terminal 100 at the historical location within a specified period of time (for example, 15 days). For example, Table 2 shows a possible database example. Specifically:

**Table 2**

| Historical location | Historical satellite | Historical satellite-communication performance indicator |
|---|---|---|
| (longitude A, latitude A) | Satellite 1 and satellite 2 | Satellite 1: carrier-to-noise ratio 1<br>Satellite 2: carrier-to-noise ratio 2 |
| (longitude B, latitude B) | Satellite 2 | Satellite 2: carrier-to-noise ratio 2 |
| (longitude C, latitude C) | Satellite 3 | Satellite 3: carrier-to-noise ratio 3 |
| ... | ... | ... |

As shown in Table 2, the database may store a correspondence between a historical location and a historical satellite and a correspondence between a historical satellite and a communication performance indicator. For example, satellites that communicate with the terminal in a historical location corresponding to the longitude and latitude of (longitude A, latitude A) are the satellite 1 and the satellite 2. The communication performance indicator of the satellite 1 is the carrier-to-noise ratio 1 and the communication performance indicator of the satellite 2 is the carrier-to-noise ratio 2. For example, when determining that the closest historical location is the (longitude A, latitude A), the terminal 100 may compare the carrier-to-noise ratio 1 of the satellite 1 with the carrier-to-noise ratio 2 of the satellite 2. When determining that the carrier-to-noise ratio 1 is greater than the carrier-to-noise ratio 2, the terminal 100 determines that the target satellite is the satellite 1.

If the terminal 100 does not pre-store the longitude and latitude of the beam center of each satellite involved in Manner 2 and the database involved in Manner 3, the target satellite may be determined in Manner 4.

Manner 4: The terminal 100 may directly calculate a Euclidean distance between the terminal 100 and any satellite, and select a satellite with a shortest Euclidean distance as the target satellite. For example, the terminal 100 may calculate the Euclidean distance from the terminal 100 to any satellite by using a timestamp of a navigation message and the speed of light, and select the satellite with the shortest Euclidean distance as the target satellite.

S802: The terminal 100 determines, based on location information of the terminal 100 and location information of the target satellite, an azimuth angle and a pitch angle in a satellite transmission link direction in a ground coordinate system.

The location information of the terminal 100 may include but is not limited to information such as a longitude, a latitude, and an altitude of the terminal 100. The location information of the target satellite may include but is not limited to information such as a longitude and a latitude of a beam center of the target satellite and an altitude of the target satellite.

Specifically, the terminal 100 may obtain a longitude and a latitude of a current location of the terminal 100 by using the GNSS. The longitude and latitude of the beam center of the target satellite are pre-stored in the terminal 100.

The ground coordinate system may be a three-dimensional coordinate system that is established by using a center of the terminal 100 as an origin and a celestial direction, a first northbound direction, and a first eastbound direction as three axes. The celestial direction is a direction in which the center of the earth's sphere points to the center of the terminal 100. The first northbound direction is a direction in which the north geographical pole is located. The first eastbound direction is an east eastbound direction perpendicular to the first northbound direction.

The satellite transmission link direction is a direction in which the center of the terminal 100 points to the target satellite.

The azimuth angle is an included angle between a projection of the satellite transmission link direction on a horizontal plane and the first northbound direction.

The pitch angle is an included angle between the projection of the satellite transmission link direction on the horizontal plane and the satellite transmission link direction.

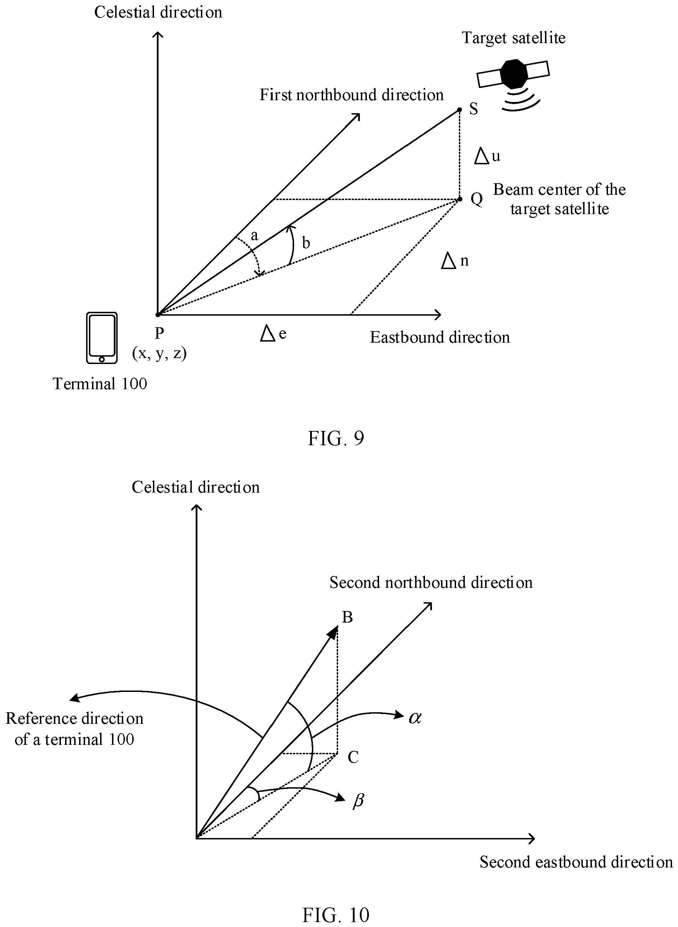

FIG. 9 is a schematic diagram of an azimuth angle and a pitch angle in a satellite transmission link direction in ground coordinates.

As shown in FIG. 9, a point P is the center of the terminal 100, a point S is the target satellite, and a point Q is the beam center of the target satellite. $\overrightarrow{PS}$ is the satellite transmission link direction, and $\overrightarrow{PQ}$ is the projection of the satellite transmission link direction on the horizontal plane. a is the azimuth angle in the satellite transmission link direction, and b is the pitch angle in the satellite transmission link direction. $\Delta u$ is an orbital height of the target satellite, and is pre-stored in the terminal 100. The terminal 100 may obtain, through calculation based on the longitude and latitude of the terminal 100 and the longitude and latitude of the beam center of the target satellite, a distance from the beam center of the target satellite to the eastbound direction, that is, $\Delta n$ shown in FIG. 9, and the distance from the beam center of the target satellite to the northbound direction, that is, $\Delta e$ shown in FIG. 9. Based on the description of FIG. 9, related calculation formulas for determining, by the terminal 100, the azimuth angle and the pitch angle in the satellite transmission link direction in the ground coordinate system are as follows:

$$a = \tan^{-1}\left(\frac{\Delta e}{\Delta n}\right) \quad \text{Formula (1)}$$

$$b = \sin^{-1}\left(\frac{\Delta u}{\sqrt{(\Delta e)^2 + (\Delta u)^2 + (\Delta n)^2}}\right) \quad \text{Formula (2)}$$

Formula (1) is used to calculate the azimuth angle in the satellite transmission link direction, and a represents the azimuth angle. Refer to a shown in FIG. 9. $\Delta e$ is the distance from the beam center of the target satellite to the northbound direction. Refer to $\Delta e$ shown in FIG. 9. $\Delta n$ is the distance from the beam center of the target satellite to the eastbound direction. Refer to $\Delta n$ shown in FIG. 9. Formula (2) is used to calculate the pitch angle in the satellite transmission link direction, and b represents the pitch angle. Refer to b shown in FIG. 9. Δu is the orbital altitude of the target satellite. Refer to Δu shown in FIG. 9.

S803: The terminal 100 determines, based on geomagnetic data and attitude data that are of the terminal 100, a pitch angle and an azimuth angle in a reference direction of the terminal 100 in a geomagnetic coordinate system.

The geomagnetic data may include data such as a magnetic field strength and a geomagnetic north pole direction (also referred to as a magnetic north direction). The terminal 100 may obtain the geomagnetic data by using a built-in sensor (for example, a magnetometer). The magnetic field strength is a magnitude of a magnetic field around the terminal 100, and is used to measure whether other measured geomagnetic data (for example, the magnetic north direction) is accurate. When the magnetic field strength is greater than a preset magnetic field strength, the terminal 100 may prompt, by using prompt information, a user to perform magnetic field calibration, so that the magnetic field strength is less than the preset magnetic field strength. For the calibration process, refer to embodiments shown in FIG. 6, FIG. 7A, and FIG. 7B. Details are not described herein again.

The magnetic north direction may be used by the terminal 100 to determine the geomagnetic coordinate system. The geomagnetic coordinate system may be a three-dimensional coordinate system that is established by using the center of the terminal 100 as an origin and the celestial direction, a second northbound direction, and a second eastbound direction as three axes. The celestial direction is a direction in which the center of the earth's sphere points to the center of the terminal 100. The second northbound direction is a direction of the magnetic north direction. The second eastbound direction is an eastbound direction perpendicular to the second northbound direction.

The terminal 100 may detect the attitude data of the terminal in the magnetic north coordinate system by using a built-in sensor (for example, a gyroscope sensor or an acceleration sensor), and determine the pitch angle and the azimuth angle in the reference direction of the terminal 100 in the geomagnetic coordinate system based on the attitude data.

The reference direction of the terminal 100 is a direction parallel to a screen and perpendicular to a top frame. The azimuth angle is an included angle between a projection of the reference direction of the terminal 100 on the horizontal plane and the second northbound direction. The pitch angle is an included angle between the projection of the reference direction of the terminal 100 on the horizontal plane and the reference direction of the terminal 100.

FIG. 10 is a schematic diagram of an azimuth angle and a pitch angle in a reference direction of a terminal 100 in geomagnetic coordinates.

As shown in FIG. 10, a point P is the center of the terminal 100, and the geomagnetic coordinates formed by the celestial direction, the second northbound direction, and the second eastbound direction are shown in FIG. 10. $\overrightarrow{PB}$ is the reference direction of the terminal 100, and $\overrightarrow{PC}$ is the projection of the reference direction of the terminal 100 on the horizontal plane. α is the pitch angle in the reference direction of the terminal 100 in the geomagnetic coordinate system, and β is the azimuth angle in the reference direction of the terminal 100 in the geomagnetic coordinate system.

S804: The terminal 100 determines, based on the azimuth angle and the pitch angle in the reference direction of the terminal 100 in the geomagnetic coordinate system and a magnetic declination angle between the geomagnetic coordinate system and the ground coordinate system, an azimuth angle and a pitch angle in the reference direction of the terminal 100 in the ground coordinate system.

The azimuth angle in the reference direction of the terminal 100 in the ground coordinate system is an included angle between the projection of the reference direction of the terminal 100 on the horizontal plane and the first northbound direction. The pitch angle is an included angle between the projection of the reference direction of the terminal 100 on the horizontal plane and the reference direction of the terminal 100.

The azimuth angle and the pitch angle in the reference direction of the terminal 100 in the ground coordinate system are respectively referred to as an azimuth angle in the first northbound direction and a pitch angle in the first northbound direction. The azimuth angle and the pitch angle in the reference direction of the terminal 100 in the geomagnetic coordinate system are respectively referred to as an azimuth angle in the second northbound direction and a pitch angle in the second northbound direction.

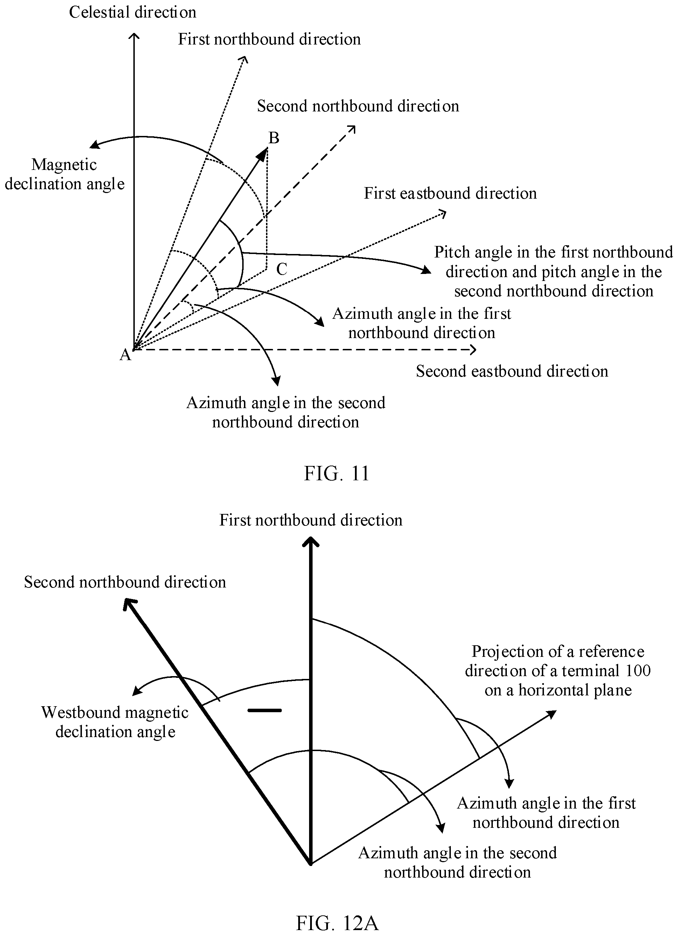

FIG. 11 is a schematic diagram of azimuth angles and pitch angles in a reference direction of a terminal 100 respectively in a geomagnetic coordinate system and a ground coordinate system.

The following describes in detail a relationship between the azimuth angle in the first northbound direction and the azimuth angle in the second northbound direction and a relationship between the pitch angle in the first northbound direction and the pitch angle in the second northbound direction with reference to FIG. 11.

As shown in FIG. 11, both the geomagnetic coordinate system and the ground coordinate system use the celestial direction as one of the three axes of the coordinate system. The horizontal plane is perpendicular to the celestial direction, and the horizontal plane of the geomagnetic coordinate system is the same as the horizontal plane of the ground coordinate system. Therefore, the pitch angle in the reference direction of the terminal 100 in the geomagnetic coordinate system is the same as the pitch angle in the reference direction of the terminal 100 of the ground coordinate system, that is, the pitch angle in the first northbound direction is the same as the pitch angle in the second northbound direction. However, there is a magnetic declination angle between the first northbound direction and the second northbound direction, so that there is a magnetic declination angle difference between the azimuth angle in the first northbound direction and the azimuth angle in the second northbound direction.

The magnetic declination angle may be an eastbound magnetic declination angle or a westbound magnetic declination angle. When the second northbound direction is eastbound relative to the first northbound direction, the magnetic declination angle is positive, and is referred to as the eastbound magnetic declination angle. When the second northbound direction is westbound relative to the first northbound direction, the magnetic declination angle is negative, and is referred to as the westbound magnetic declination angle.

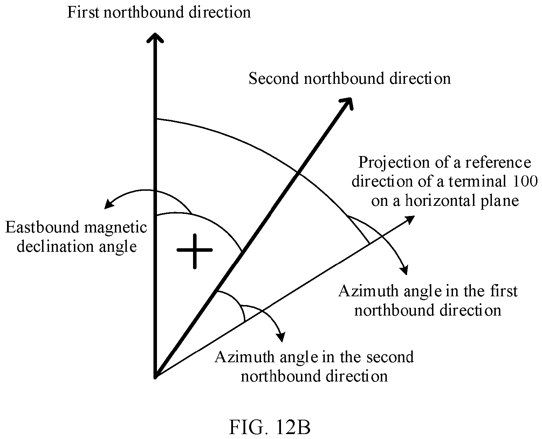

FIG. 12A and FIG. 12B show relationships between an azimuth angle in a first northbound direction and an azimuth angle in a second northbound direction and magnetic declination angles.

As shown in FIG. 12A, when the magnetic declination angle is the westbound magnetic declination angle, the azimuth angle in the first northbound direction = the azimuth angle in the second northbound direction - |the westbound magnetic declination angle|.

As shown in FIG. 12B, when the magnetic declination angle is the eastbound magnetic declination angle, the azimuth angle in the first northbound direction = the azimuth angle in the second northbound direction + |the eastbound magnetic declination angle|.

It can be learned that the azimuth angle in the reference direction of the terminal 100 in the ground coordinate system is the azimuth angle in the first northbound direction, and the pitch angle in the reference direction of the terminal 100 in the ground coordinate system is the same as the azimuth angle in the reference direction of the terminal 100 in the geomagnetic coordinate system.

S805: The terminal 100 may determine, based on a pitch angle and an azimuth angle in the radiation direction of the satellite antenna in a spherical coordinate system of the terminal, an azimuth angle offset and a pitch angle offset between the radiation direction of the satellite antenna in the ground coordinate system and the reference direction of the terminal 100 in the ground coordinate system.

The spherical coordinate system of the terminal uses the center of the terminal 100 as an origin O, the reference direction of the terminal 100 as a Z axis, a horizontal direction as a Y axis, and a direction that is in the horizontal plane and that is perpendicular to the Y axis as an X axis. The radiation direction of the satellite antenna is a maximum gain direction of a signal when an antenna transmits the signal, and signal strength in this direction is the strongest.

Based on the spherical coordinate system of the terminal, the pitch angle and the azimuth angle in the radiation direction of the satellite antenna are pre-stored in the terminal 100. The pitch angle is an included angle between the radiation direction of the satellite antenna and the reference direction of the terminal 100 in the spherical coordinate system of the terminal. The azimuth angle is an included angle between a projection of the radiation direction of the satellite antenna in an XOY plane and the X axis in the spherical coordinate system of the terminal.

Optionally, the pre-stored pitch angle and azimuth angle in the radiation direction of the satellite antenna in the terminal 100 may be provided by a manufacturer of the terminal 100. Specifically, the manufacturer of the terminal 100 may traverse, in a dark room of a laboratory, efficiency of a receiving and sending antenna at various angles of spherical coordinates, determine a direction with highest efficiency as a pitch angle and an azimuth angle in the radiation direction of the satellite antenna, and store the direction in a memory of the terminal 100.

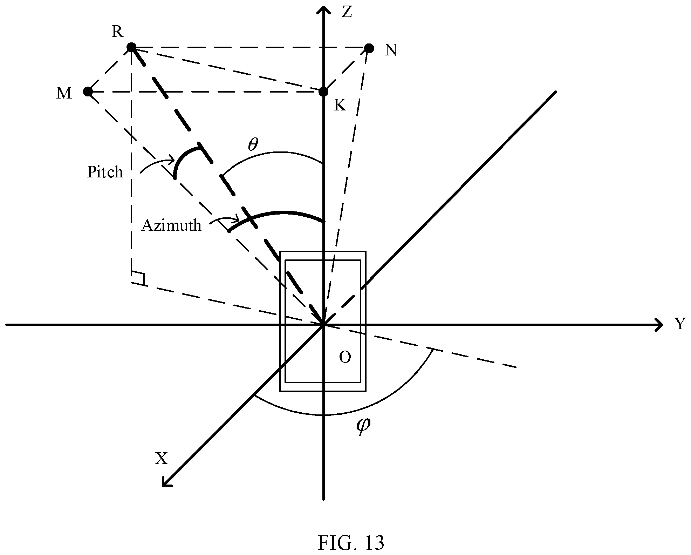

FIG. 13 is a schematic diagram of a spherical coordinate system of a terminal, an azimuth angle offset, and a pitch angle offset.

As shown in FIG. 13, in the spherical coordinate system of the terminal, the center of the terminal 100 is an origin O, a reference direction of the terminal 100 is a Z axis, and an XOY plane is perpendicular to the Z axis. In the figure, $OR$ is the radiation direction of the satellite antenna, $\theta$ is the pitch angle in the radiation direction of the satellite antenna in the spherical coordinate system of the terminal, and $\varphi$ is the azimuth angle in the radiation direction of the satellite antenna in the spherical coordinate system of the terminal. The azimuth angle offset is azimuth, and the pitch angle offset is pitch. $|\overrightarrow{OK}|$ is a projection of $OR$ on the Z axis, and a length of $|\overrightarrow{OK}|$ is 1. Herein, formulas for calculating azimuth and pitch are as follows:

$$\text{azimuth} = \tan^{-1}\left(\frac{|\overrightarrow{MK}|}{|\overrightarrow{OK}|}\right) = \tan^{-1}(\tan\theta \times \cos(90^\circ - \varphi)) \quad \text{Formula (3)}$$

$$\text{pitch} = \tan^{-1}\left(\frac{|\overrightarrow{MP}|}{|\overrightarrow{OM}|}\right) = \tan^{-1}(\tan\theta \times \sin(90^\circ - \varphi) \times \cos(\text{azimuth})) \quad \text{Formula (4)}$$

In Formula (3) and Formula (4), $\theta$ is the pitch angle in the radiation direction of the satellite antenna in the spherical coordinate system of the terminal, and $\varphi$ is the azimuth angle in the radiation direction of the satellite antenna in the spherical coordinate system of the terminal.

S806: The terminal 100 may compensate the azimuth angle and the pitch angle in the reference direction of the terminal 100 in the ground coordinate system based on the azimuth angle offset and the pitch angle offset, to obtain a pitch angle and an azimuth angle in the radiation direction of the satellite antenna in the ground coordinate system.

In the ground coordinate system, the azimuth angle in the radiation direction of the satellite antenna is an included angle between the projection of the radiation direction of the satellite antenna on the horizontal plane and the first northbound direction. The pitch angle is an included angle between the projection of the radiation direction of the satellite antenna on the horizontal plane and the radiation direction of the satellite antenna.

The terminal 100 adds the azimuth angle in the reference direction of the terminal 100 in the ground coordinate system to the azimuth angle offset, to obtain the azimuth angle in the radiation direction of the satellite antenna in the ground coordinate system. The terminal 100 adds the pitch angle in the reference direction of the terminal 100 in the ground coordinate system and the pitch angle offset, to obtain the pitch angle in the radiation direction of the satellite antenna in the ground coordinate system.

In a possible implementation, in addition to the manners in step S803 to step S806, the terminal 100 may obtain the azimuth angle and the pitch angle in the radiation direction of the satellite antenna in the terminal 100 in the ground coordinate system in another manner.

For example, the terminal 100 may obtain, by using a GNSS, an azimuth angle and a pitch angle in a radiation direction of a GNSS antenna in the terminal 100 in ground coordinates. When the GNSS antenna and the satellite antenna in the terminal 100 are a same antenna, the azimuth angle and the pitch angle in the radiation direction of the GNSS antenna are the azimuth angle and the pitch angle in the radiation direction of the terminal 100 in the ground coordinate system.

When the GNSS antenna and the satellite antenna in the terminal 100 are different antennas, the terminal 100 may determine, based on the pitch angle and the azimuth angle in the radiation direction of the satellite antenna in the terminal 100 in the spherical coordinates of the terminal, the azimuth angle offset and the pitch angle offset between the radiation direction of the satellite antenna and the reference direction in the ground coordinate system, as shown in step S805. The terminal 100 may further determine, based on the pitch angle and the azimuth angle in the radiation direction of the GNSS antenna in the spherical coordinates of the terminal in the ground coordinate system, the azimuth angle offset and the pitch angle offset between the radiation direction of the GNSS antenna and the reference direction. For determining, by the terminal 100, the azimuth angle offset and the pitch angle offset between the radiation direction of the GNSS antenna and the reference direction, refer to the foregoing embodiment of determining, by the terminal 100, the azimuth angle offset and the pitch angle offset between the radiation direction of the satellite antenna and the reference direction in step S805. Details are not described herein again. The terminal 100 may obtain the pitch angle and azimuth angle in the radiation direction of the satellite antenna in the ground coordinate system based on the azimuth angle offset and the pitch angle offset between the radiation direction of the GNSS antenna and the reference direction, the azimuth angle offset and the pitch angle offset between the radiation direction of the satellite antenna and the reference direction, and the pitch angle and the azimuth angle in the radiation direction of the GNSS antenna.

S807: The terminal 100 may determine an azimuth angle difference and a pitch angle difference between the radiation direction of the satellite antenna and the satellite transmission link direction based on the pitch angle and the azimuth angle in the radiation direction of the satellite antenna and the pitch angle and the azimuth angle in the satellite transmission link direction in the ground coordinate system.

For example, formulas for calculating the azimuth angle difference and the pitch angle difference are as follows:

azimuth angle difference = azimuth angle in the radiation direction of the satellite antenna - azimuth angle in the satellite transmission link direction pitch angle difference = pitch angle in the radiation direction of the satellite antenna - pitch angle in the satellite transmission link direction

In a possible implementation, the terminal 100 uses an absolute value of a difference between the azimuth angle in the radiation direction of the satellite antenna and the azimuth angle in the satellite transmission link direction in the ground coordinate system as an azimuth angle deviation value, and uses an absolute value of a difference between the pitch angle in the radiation direction of the satellite antenna and the pitch angle in the satellite transmission link direction in the ground coordinate system as a pitch angle deviation value.

S808: The terminal 100 determines whether the azimuth angle difference is less than or equal to a first threshold and whether the pitch angle difference is less than or equal to a second threshold.

When determining that the azimuth angle difference is less than or equal to the first threshold and the pitch angle difference is less than or equal to the second threshold, the terminal 100 determines that the radiation direction of the satellite antenna is aligned with the target satellite at this time, and may perform step S811.

Otherwise, the terminal 100 may determine that the radiation direction of the satellite antenna is not aligned with the target satellite at this time, and may perform step S809 and step S810.

S809: The terminal 100 displays deviation prompt information, where the deviation prompt information is used to prompt the user to adjust an attitude of the terminal 100, so that the radiation direction of the satellite antenna is aligned with the target satellite.

In this case, the radiation direction of the satellite antenna is not aligned with the target satellite, and the terminal 100 may display the deviation prompt information to prompt the user to adjust the attitude of the terminal 100, and update the pitch angle difference and the azimuth angle difference until the azimuth angle difference is less than or equal to the first threshold and the pitch angle difference is less than or equal to the second threshold, so that the radiation direction of the satellite antenna is aligned with the target satellite.

In a possible implementation, the deviation prompt information may include a manner of prompting the user how to adjust the terminal 100, for example, the prompt information 362 in FIG. 3G.

In another possible implementation, in addition to the manner of prompting the user how to adjust the terminal 100, the deviation prompt information may further include real-time satellite alignment data such as an azimuth angle deviation and a pitch angle deviation, for example, the azimuth angle deviation and the pitch angle deviation in the prompt information 363 in FIG. 3G.

It may be understood that, in another implementation, the deviation prompt information may further include more or less content than that in the foregoing implementation, provided that an objective of prompting the user to adjust the attitude of the terminal 100 can be achieved. This is not limited in embodiments of this application.

S810: The terminal 100 receives an input for adjusting the attitude of the terminal 100.

For example, the input for adjusting the attitude of the terminal 100 may be an input for adjusting the terminal 100 by the user based on the deviation prompt information. After receiving the input for adjusting the attitude of the terminal 100, the terminal 100 may re-execute step S802 to step S808, to update the pitch angle difference and the azimuth angle difference in real time until the azimuth angle difference is less than or equal to the first threshold and the pitch angle difference is less than or equal to the second threshold. To be specific, a result in step S808 is determined as "Yes", so that the radiation direction of the satellite antenna is aligned with the target satellite.

S811: The terminal 100 displays alignment prompt information, where the alignment prompt information is used to prompt the user that the radiation direction of the satellite antenna is aligned with the target satellite.

The alignment prompt information may prompt the user that the radiation direction of the satellite antenna is aligned with the target satellite. For example, the alignment prompt information may be the prompt information 371 in FIG. 3H.

After the radiation direction of the satellite antenna is aligned with the target satellite, the terminal 100 may send the first data packet to the another terminal through the target satellite, or may obtain, through the target satellite, the second data packet sent by the another terminal to the terminal 100.

It should be noted that the terminal 100 may send the first data packet to the another terminal through the target satellite. Specifically, the terminal 100 may send the first data packet to the target satellite along the radiation direction of the satellite antenna. After the target satellite receives the first data packet sent by the terminal 100, the target satellite may forward the first data packet to the satellite network device 200, and the satellite network device 200 may send the first data packet to the another terminal by using a cellular network device 400/satellite 21.

When the terminal 100 receives the second data packet sent by the another terminal to the terminal 100, the terminal 100 may send a service request to the target satellite along the radiation direction of the satellite antenna. After receiving the service request of the terminal 100, the target satellite may forward the service request to the satellite network device 200. The satellite network device 200 may forward the second data packet to the terminal 100 through the target satellite based on the service request.

In some embodiments, an execution sequence of step S804 to step S806 is not fixed. The terminal 100 may further determine, based on the azimuth angle and the pitch angle in the reference direction of the terminal 100 in the geomagnetic coordinate system and the azimuth angle and the pitch angle in the radiation direction of the satellite antenna in the spherical coordinate system of the terminal, the azimuth angle offset and the pitch angle offset between the radiation direction of the satellite antenna in the geomagnetic coordinate system and the reference direction of the terminal 100 in the geomagnetic coordinate system, and perform compensation, to obtain the pitch angle and the azimuth angle in the radiation direction of the satellite antenna in the geomagnetic coordinate system. Then, the terminal 100 may further determine the azimuth angle and the pitch angle in the reference direction of the terminal 100 in the ground coordinate system based on the magnetic declination angle between the geomagnetic coordinate system and the ground coordinate system.

In some embodiments, before the terminal 100 performs step S803, if the terminal 100 obtains and calculates the geomagnetic data of the terminal 100 by using the magnetometer in the satellite alignment process, to calculate the azimuth angle and the pitch angle in the reference direction of the terminal 100 in the ground coordinate system and complete satellite alignment, the terminal 100 may detect the surrounding magnetic field strength. When the magnetic field strength is greater than the preset magnetic field strength, the terminal 100 may use prompt information to prompt the user to perform magnetic field calibration, so that the magnetic field strength is less than the preset magnetic field strength. In this way, the magnetometer can accurately obtain and calculate the geomagnetic data of the terminal 100. A possible value of the preset magnetic field strength may be 200 uT. For a group of example interfaces involved in the process, refer to the foregoing descriptions of FIG. 6, FIG. 7A, and FIG. 7B.

The following describes a transmission control method in a satellite communication system provided in embodiments of this application.

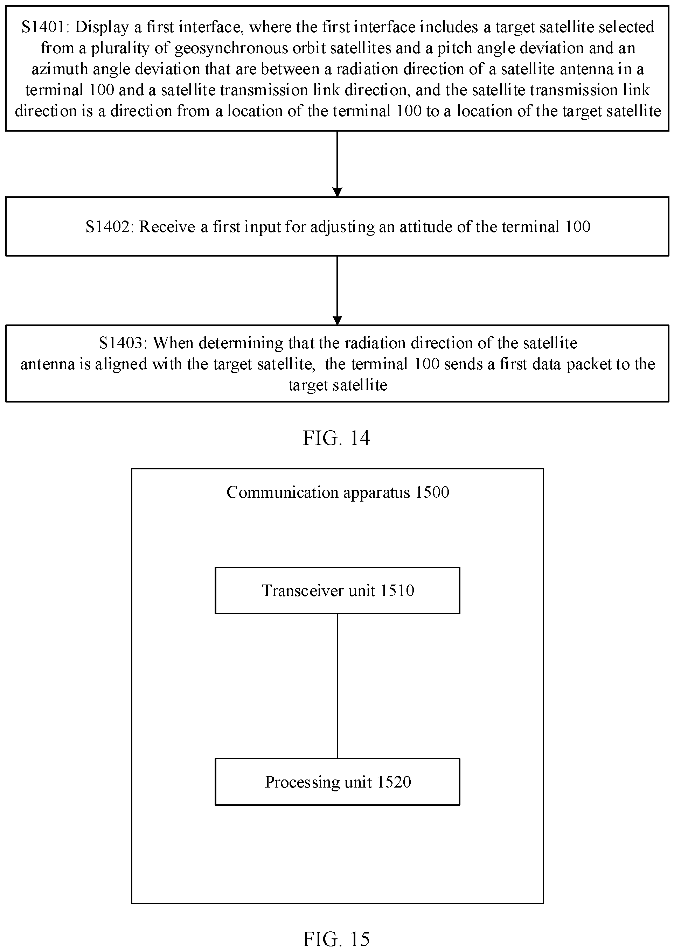

FIG. 14 is a schematic flowchart of a transmission control method in a satellite communication system according to an embodiment of this application.

As shown in FIG. 14, the transmission control method in the satellite communication system includes the following steps.

S1401: A terminal 100 displays a first interface, where the first interface includes a target satellite selected from a plurality of geosynchronous orbit satellites and a pitch angle deviation and an azimuth angle deviation that are between a radiation direction of a satellite antenna in the terminal 100 and a satellite transmission link direction, and the satellite transmission link direction is a direction from a location of the terminal 100 to a location of the target satellite.

S1402: The terminal 100 receives a first input for adjusting an attitude of the terminal 100.

The first input is an input of a user for adjusting the attitude of the terminal 100, for example, an input for rotating the terminal 100 in a left-hand direction.

S1403: When the terminal 100 determines that the radiation direction of the satellite antenna is aligned with the target satellite, the terminal 100 sends a first data packet to the target satellite.

A service type of the first data packet may be a packet communication service, or a mailbox overview query service, or a mail message download service.

Specifically, the terminal 100 displays the first interface, and detects, in response to the first input of the user, whether the radiation direction of the satellite antenna is aligned with the target satellite in real time. For specific descriptions of sending the first data packet, refer to the foregoing embodiments. Details are not described herein again.

The following describes some possible implementations performed by the terminal 100.

In a possible implementation, before the terminal displays the first interface, the method further includes: The terminal displays a second interface, where the second interface displays the plurality of geosynchronous orbit satellites. After the terminal determines the target satellite from the plurality of geosynchronous orbit satellites, the terminal displays a first mark, where the first mark indicates that the target satellite is selected.

Specifically, refer to the embodiments shown in FIG. 3E and FIG. 3F.

In a possible implementation, a service type of the first data packet is a packet communication service. Before the terminal displays the first interface, the method further includes: The terminal displays a third interface, where the third interface includes first message content entered by the user and a first sending control, and the first data packet includes the first message content. The terminal receives a second input for the first sending control.

That a terminal displays a first interface specifically includes: The terminal displays the first interface in response to the first input.

Specifically, refer to the embodiment shown in FIG. 3D.

In a possible implementation, a service type of the first data packet is a packet communication service. Before the terminal displays the second interface, the method further includes: The terminal displays a third interface, where the third interface includes first message content entered by the user and a first sending control, and the first data packet includes the first message content. The terminal receives a second input for the first sending control.

That the terminal displays a second interface specifically includes: The terminal displays the second interface in response to the second input.

Specifically, refer to the embodiment shown in FIG. 3D.

In a possible implementation, after the terminal sends the first data packet to the target satellite, the method further includes: The terminal receives a first application layer return notification.

When the first application layer return notification indicates that the first data packet is successfully received, the terminal displays success prompt information, where the success prompt information is used to prompt the user that the first data packet is successfully sent.

When the first application layer return notification indicates that the first data packet fails to be received, the terminal displays failure prompt information, where the failure prompt information is used to prompt the user that the first data packet fails to be sent.

Specifically, refer to the embodiments shown in FIG. 3I and FIG. 3J.

In a possible implementation, a service type of a first application layer packet is a mail message download service. Before the terminal displays the first interface, the method further includes: The terminal displays a fourth interface, where the fourth interface includes a first receiving control. The terminal receives a third input for the first receiving control.

That a terminal displays a first interface specifically includes: The terminal displays the first interface in response to the third input.

Specifically, refer to the embodiments shown in FIG. 3B and FIG. 3G.

In a possible implementation, a service type of a first application layer packet is a mail message download service. Before the terminal displays the second interface, the method further includes: The terminal displays a fourth interface, where the fourth interface includes a first receiving control. The terminal receives a third input for the first receiving control.

That the terminal displays a second interface specifically includes: The terminal displays the second interface in response to the third input.

Specifically, refer to the embodiments shown in FIG. 3B and FIG. 3E.

In a possible implementation, after the terminal sends the first data packet to the target satellite, the method further includes: The terminal receives a second data packet, where the second data packet includes second message content, and the second message content is short message content sent by other user equipment to the terminal through the target satellite. The terminal displays the second message content.

Specifically, refer to the embodiments shown in FIG. 4A and FIG. 4B.

In a possible implementation, after the terminal sends the first data packet to the target satellite, the method further includes: When the terminal does not receive a second data packet within a preset time threshold, the terminal displays request failure prompt information, where the request failure prompt information is used to prompt the user that the first data packet fails to be sent.

Specifically, refer to the embodiments shown in FIG. 4A and FIG. 4B.

In a possible implementation, a service type of a first application layer packet is a mailbox overview query service. Before the terminal displays the first interface, the method further includes: The terminal displays a fifth interface, where the fifth interface includes a first query control. The terminal receives a fourth input for the first query control.

That a terminal displays a first interface specifically includes: The terminal displays the first interface in response to the fourth input.

Specifically, refer to the embodiments shown in FIG. 3B and FIG. 3G.

In a possible implementation, a service type of a first application layer packet is a mailbox overview query service. Before the terminal displays the second interface, the method further includes: The terminal displays a fifth interface, where the fifth interface includes a first query control. The terminal receives a fourth input for the first query control.

That the terminal displays a second interface specifically includes: The terminal displays the second interface in response to the fourth input.

Specifically, refer to the embodiments shown in FIG. 3B and FIG. 3E.

In a possible implementation, after the terminal sends the first data packet to the target satellite, the method further includes: The terminal receives a third data packet, where the third data packet includes information about a quantity of short messages sent by other user equipment to the terminal through the target satellite.

Specifically, refer to the embodiment shown in FIG. 4D.

In a possible implementation, after the terminal sends the first data packet to the target satellite, the method further includes: When the terminal does not receive a third data packet within a preset time threshold, the terminal displays query failure prompt information, where the query failure prompt information is used to prompt the user that the first data packet fails to be sent.

Specifically, refer to the embodiment shown in FIG. 4D.

In a possible implementation, after the terminal sends the first data packet to the target satellite, the method further includes: The terminal sends a fourth data packet to the target satellite, where a service type of the fourth data packet is a mail message download service.

Specifically, refer to the embodiment shown in FIG. 3J.

In a possible implementation, after the terminal sends the fourth data packet to the target satellite, the method further includes: The terminal receives a second data packet, where the second data packet includes second message content, and the second message content is short message content sent by other user equipment to the terminal through the target satellite. The terminal displays the second message content.

Specifically, refer to the embodiment shown in FIG. 3J.

In a possible implementation, after the terminal sends the first data packet to the target satellite, the method further includes: The terminal displays sending prompt information, where the sending prompt information is used to prompt the user that the terminal sends the first data packet to the target satellite.

Specifically, refer to the embodiment shown in FIG. 3I.

In a possible implementation, when the terminal determines that the radiation direction of the satellite antenna is aligned with the target satellite, the method further includes: The terminal displays alignment prompt information, where the alignment prompt information is used to prompt the user terminal that the radiation direction of the satellite antenna is aligned with the target satellite.

Specifically, refer to the embodiment shown in FIG. 3H.

In a possible implementation, the target satellite is a satellite determined by the terminal as a satellite with strongest signal strength from the plurality of geosynchronous orbit satellites.

Specifically, refer to the embodiment shown in FIG. 8A and FIG. 8B.

In a possible implementation, the target satellite is a satellite with a shortest beam center distance in the plurality of geosynchronous orbit satellites. The beam center distance is obtained by the terminal based on longitude and latitude coordinates of the terminal and longitude and latitude coordinates of a beam center of the geosynchronous orbit satellite.

Specifically, refer to the embodiment shown in FIG. 8A and FIG. 8B.

In a possible implementation, the target satellite is a first historical satellite. The first historical satellite is a historical satellite corresponding to a first historical location closest to a current location of the terminal in a database of the terminal.

Specifically, refer to the embodiment shown in FIG. 8A and FIG. 8B.

In a possible implementation, the target satellite is a geosynchronous orbit satellite with a shortest Euclidean distance to the terminal.

Specifically, refer to the embodiment shown in FIG. 8A and FIG. 8B.

In a possible implementation, the pitch angle deviation is a difference between a pitch angle in the radiation direction of the satellite antenna and a pitch angle in the satellite transmission link direction in a ground coordinate system. The azimuth angle deviation is a difference between an azimuth angle in the radiation direction of the satellite antenna and an azimuth angle in the satellite transmission link direction in the ground coordinate system.

Specifically, refer to the embodiment shown in FIG. 8A and FIG. 8B.

In a possible implementation, the azimuth angle and the pitch angle in the satellite transmission link direction are obtained by the terminal based on location information of the terminal and location information of the target satellite.

Specifically, refer to the embodiment shown in FIG. 8A and FIG. 8B and FIG. 9.

In a possible implementation, the azimuth angle in the radiation direction of the satellite antenna is determined by the terminal based on an azimuth angle in a reference direction of the terminal and an azimuth angle offset. The pitch angle in the radiation direction of the satellite antenna is determined by the terminal based on a pitch angle in the reference direction of the terminal and a pitch angle offset. The azimuth angle offset is determined by the terminal based on an azimuth angle in the radiation direction of the satellite antenna in a spherical coordinate system of the terminal and an azimuth angle in the reference direction of the terminal in the ground coordinate system. The pitch angle offset is determined by the terminal based on a pitch angle in the radiation direction of the satellite antenna in the spherical coordinate system of the terminal and a pitch angle in the reference direction of the terminal in the ground coordinate system.

Specifically, refer to the embodiment shown in FIG. 8A and FIG. 8B and FIG. 13.

In a possible implementation, the azimuth angle and the pitch angle in the reference direction of the terminal in the ground coordinate system are determined by the terminal based on an azimuth angle and a pitch angle in the reference direction of the terminal in a geomagnetic coordinate system and a magnetic declination angle between the geomagnetic coordinate system and the ground coordinate system. The pitch angle and the azimuth angle in the reference direction of the terminal in the geomagnetic coordinate system are determined by the terminal based on geomagnetic data and attitude data that are of the terminal.

Specifically, refer to the embodiments shown in FIG. 8A and FIG. 8B, FIG. 10, FIG. 11, FIG. 12A, and FIG. 12B.

In a possible implementation, when the terminal determines that the radiation direction of the satellite antenna is not aligned with the target satellite, the method further includes: The terminal displays deviation prompt information, where the deviation prompt information is used to prompt the user to adjust the attitude of the terminal, so that the radiation direction of the satellite antenna in the terminal is aligned with the target satellite.

Specifically, refer to the embodiment shown in FIG. 3G.

In a possible implementation, that the terminal determines that the radiation direction of the satellite antenna is not aligned with the target satellite specifically includes: When the terminal determines that the azimuth angle deviation is greater than a first threshold or the pitch angle deviation is greater than a second threshold, the terminal determines that the radiation direction of the satellite antenna is not aligned with the target satellite.

Specifically, refer to the embodiment shown in FIG. 8A and FIG. 8B.

In a possible implementation, that the terminal determines that the radiation direction of the satellite antenna is aligned with the target satellite specifically includes: When the azimuth angle deviation is less than or equal to the first threshold and the pitch angle deviation is less than or equal to the second threshold, the terminal determines that the radiation direction of the satellite antenna is aligned with the target satellite.

Specifically, refer to the embodiment shown in FIG. 8A and FIG. 8B.

The foregoing content describes in detail the methods provided in this application. To better implement the foregoing solutions in embodiments of this application, embodiments of this application further provide corresponding apparatuses or devices.

In embodiments of this application, the terminal 100 may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

The following describes in detail communication apparatuses in embodiments of this application with reference to FIG. 15 to FIG. 18.

When an integrated unit is used, refer to FIG. 15. FIG. 15 is a schematic diagram of a structure of a communication apparatus 1500 according to an embodiment of this application. The communication apparatus 1500 may be the terminal 100 in the foregoing embodiments. Optionally, the communication apparatus 1500 may be a chip/chip system, for example, a satellite communication chip or a BeiDou communication chip. As shown in FIG. 15, the communication apparatus 1500 may include a transceiver unit 1510 and a processing unit 1520.

In a design, the processing unit 1520 may be configured to calculate a pitch angle deviation and an azimuth angle deviation in real time.

The processing unit 1520 is further configured to detect whether a radiation direction of a satellite antenna is aligned with a target satellite.

The processing unit 1520 is further configured to generate a data packet whose service type is a packet communication service, a mail message download service, or a mail message download service.

The transceiver unit 1510 may be configured to send a satellite short message, a service request, and an overview request to the target satellite.

Optionally, the transceiver unit 1510 may be further configured to perform function steps related to sending and receiving that are performed by the terminal 100 in the method embodiment shown in FIG. 14.

Optionally, the processing unit 1520 may be further configured to perform function steps related to protocol parsing and encapsulation and operation determining that are performed by the terminal 100 in the method embodiment shown in FIG. 14.

It should be understood that the communication apparatus 1500 in this design may correspondingly perform the method steps performed by the terminal 100 in the foregoing embodiments. For brevity, details are not described herein again.

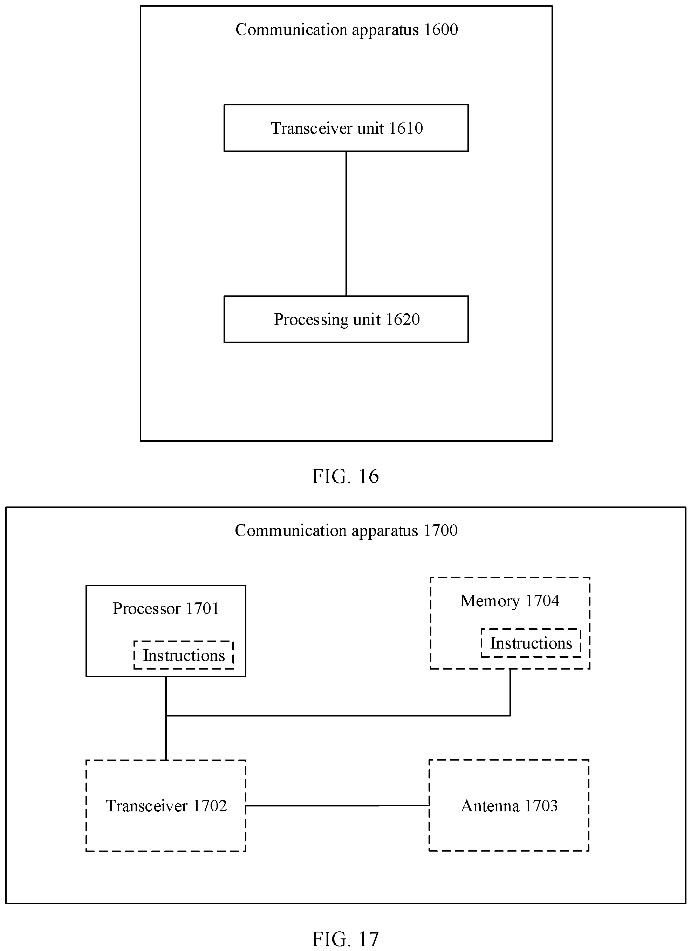

When an integrated unit is used, refer to FIG. 16. FIG. 16 is a schematic diagram of a structure of a communication apparatus 1600 according to an embodiment of this application. The communication apparatus 1600 may be the satellite network device 200 in the foregoing embodiments. Optionally, the communication apparatus 1600 may be a specific network element in the satellite network device 200, for example, one network element or a combination of a plurality of network elements in a satellite transceiver station 22, a satellite central station 23, and a satellite short packet convergence communication platform 24. As shown in FIG. 16, the communication apparatus 1600 may include a transceiver unit 1610 and a processing unit 1620.

In a design, the processing unit 1620 may be configured to obtain first message content based on a first data packet.

The processing unit 1620 is further configured to obtain a second data packet based on the first data packet and a short message sent by another terminal.

The processing unit 1620 is further configured to obtain a third data packet based on the first data packet and information about a quantity of short messages sent by the another terminal.

The transceiver unit 1610 may be configured to send the first message content to the another terminal.

The transceiver unit 1610 is further configured to send the second data packet or the third data packet to the terminal 100 through the target satellite.

Optionally, the transceiver unit 1610 may be further configured to perform function steps related to sending and receiving that are performed by the satellite network device 200 in the foregoing embodiments.

Optionally, the processing unit 1620 may be further configured to perform function steps related to protocol parsing and encapsulation and operation determining that are performed by the satellite network device 200 in the foregoing embodiments.

It should be understood that the communication apparatus 1600 in this design may correspondingly perform the method steps performed by the satellite network device 200 in the foregoing embodiments. For brevity, details are not described herein again.

The terminal 100 and the satellite network device 200 in embodiments of this application are described above. It should be understood that a product in any form that has a function of the terminal 100 in FIG. 15 or a product in any form that has a function of the satellite network device 200 in FIG. 16 shall fall within the protection scope of embodiments of this application.

In a possible product form, the terminal 100 in embodiments of this application may be implemented by using general bus architectures.

FIG. 17 is a schematic diagram of a structure of a communication apparatus 1700 according to an embodiment of this application. The communication apparatus 1700 may be the terminal 100 or an apparatus in the terminal 100. As shown in FIG. 17, the communication apparatus 1700 includes a processor 1701 and a transceiver 1702 that is internally connected to and communicates with the processor. The processor 1701 is a general-purpose processor, a dedicated processor, or the like. For example, the processor 1701 may be a baseband processor or a central processing unit for satellite communication. The baseband processor for satellite communication may be configured to process a satellite communication protocol and satellite communication data, and the central processing unit may be configured to control a communication apparatus (for example, a baseband chip, a terminal, a terminal chip, and the like), execute a computer program, and process data of the computer program. The transceiver 1702 may be referred to as a transceiver unit, a transceiver, a transceiver circuit, or the like, and is configured to implement a transceiver function. The transceiver 1702 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1700 may further include an antenna 1703 and/or a radio frequency unit (not shown in the figure). The antenna 1703 and/or the radio frequency unit may be located inside the communication apparatus 1700, or may be separated from the communication apparatus 1700. In other words, the antenna 1703 and/or the radio frequency unit may be deployed remotely or in a distributed manner.

Optionally, the communication apparatus 1700 may include one or more memories 1704. The memory 1704 may store instructions. The instructions may be a computer program. The computer program may be run on the communication apparatus 1700, so that the communication apparatus 1700 is enabled to perform the method described in the foregoing method embodiments. Optionally, the memory 1704 may further store data. The communication apparatus 1700 and the memory 1704 may be separately disposed, or may be integrated together.

The processor 1701, the transceiver 1702, and the memory 1704 may be connected through a communication bus.

In a design, the communication apparatus 1700 may be configured to perform a function of the terminal 100 in the foregoing embodiments. The processor 1701 may be configured to perform function steps related to protocol parsing and encapsulation and operation determining that are performed by the terminal 100 in the embodiment shown in FIG. 15, and/or another process used in the technology described in this specification. The transceiver 1702 may be configured to perform function steps related to sending and receiving that are performed by the terminal 100 in the embodiment shown in FIG. 15, and/or another process used in the technology described in this specification.

In any one of the foregoing designs, the processor 1701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions. The instructions may be a computer program. The computer program is run on the processor 1701, so that the communication apparatus 1700 is enabled to perform the method steps performed by the terminal 100 in the foregoing method embodiments. The computer program may be fixed in the processor 1701. In this case, the processor 1701 may be implemented by hardware.

In an implementation, the communication apparatus 1700 may include a circuit, and the circuit may implement a sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 17. The communication apparatus 1700 may be an independent device or may be a part of a large device. For example, the communication apparatus 1700 may be:

(1) an independent integrated circuit IC, a chip, or a chip system or subsystem;

(2) a set including one or more ICs, where optionally, the set of ICs may further include a storage component configured to store data and a computer program;

(3) an ASIC like a modem (Modem);

(4) a module that can be embedded in another device;

(5) a receiver, a terminal, an intelligent terminal, a cellular phone, a wireless device, a handheld device, a mobile unit, a vehicle-mounted device, a network device, a cloud device, an artificial intelligence device, or the like; or

(6) others.

In a possible product form, any network element (for example, the satellite transceiver station 22, the satellite central station 23, or the satellite short packet convergence communication platform 24) in the satellite network device 200 in embodiments of this application may be implemented by using a general bus architecture.

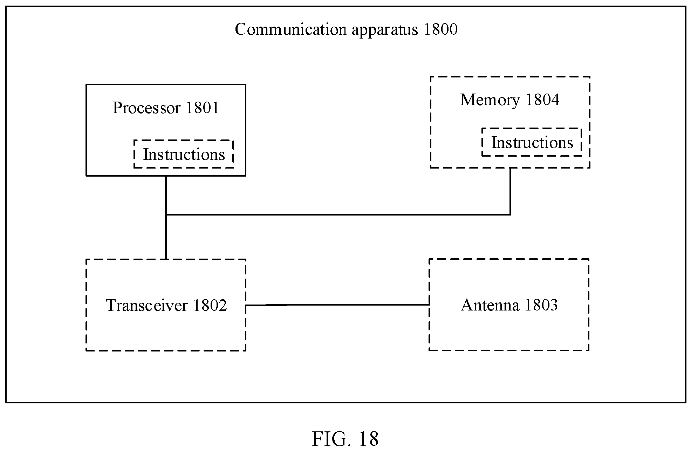

FIG. 18 is a schematic diagram of a structure of a communication apparatus 1800 according to an embodiment of this application. The communication apparatus 1800 may be the satellite network device 200 or an apparatus in the satellite network device 200. As shown in FIG. 18, the communication apparatus 1800 includes a processor 1801 and a transceiver 1802 that is internally connected to and communicates with the processor. The processor 1801 is a general-purpose processor, a dedicated processor, or the like. For example, the processor 1801 may be a baseband processor or a central processing unit for satellite communication. The baseband processor for satellite communication may be configured to process a satellite communication protocol and satellite communication data, and the central processing unit may be configured to control a communication apparatus (for example, a baseband chip, and the like), execute a computer program, and process data of the computer program. The transceiver 1802 may be referred to as a transceiver unit, a transceiver, a transceiver circuit, or the like, and is configured to implement a transceiver function. The transceiver 1802 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1800 may further include an antenna 1803 and/or a radio frequency unit (not shown in the figure). The antenna 1803 and/or the radio frequency unit may be located inside the communication apparatus 1800, or may be separated from the communication apparatus 1800. In other words, the antenna 1803 and/or the radio frequency unit may be deployed remotely or in a distributed manner.

Optionally, the communication apparatus 1800 may include one or more memories 1804. The memory 1804 may store instructions. The instructions may be a computer program. The computer program may be run on the communication apparatus 1800, so that the communication apparatus 1800 is enabled to perform the method described in the foregoing method embodiments. Optionally, the memory 1804 may further store data. The communication apparatus 1800 and the memory 1804 may be separately disposed, or may be integrated together.

The processor 1801, the transceiver 1802, and the memory 1804 may be connected through a communication bus.

In a design, the communication apparatus 1800 may be configured to perform a function of the satellite network device 200 in the foregoing embodiments. The processor 1801 may be configured to perform function steps related to protocol parsing and encapsulation and operation determining that are performed by the satellite network device 200 in the embodiment shown in FIG. 16, and/or another process used in the technology described in this specification. The transceiver 1802 may be configured to perform function steps related to sending and receiving that are performed by the satellite network device 200 in the embodiment shown in FIG. 16, and/or another process used in the technology described in this specification.

In any one of the foregoing designs, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1801 may store instructions. The instructions may be a computer program. The computer program is run on the processor 1801, so that the communication apparatus 1800 is enabled to perform the method steps performed by the satellite network device 200 in the foregoing method embodiments. The computer program may be fixed in the processor 1801. In this case, the processor 1801 may be implemented by hardware.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a satellite communication system, including a terminal 100 and a satellite network device 200. The terminal 100 and the satellite network device 200 may perform the method in any one of the foregoing embodiments.

In this application, a short packet communication function in a satellite communication system is described in detail. In addition to the BeiDou communication system, it may be understood that another satellite communication system may also have a short packet communication function. Therefore, this is not limited to the BeiDou communication system. If another satellite system also supports a short packet communication function, the method described in this application is also applicable to communication of the another satellite system.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose computer or a special-purpose computer.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, like a ROM, a random access memory RAM, a magnetic disk, or an optical disc.

**Claims**

1.  A transmission control method in a satellite communication system, comprising:

    displaying, by a terminal, a first interface, wherein the first interface comprises a target satellite selected from a plurality of geosynchronous orbit GEO satellites and a pitch angle deviation and an azimuth angle deviation that are between a radiation direction of a satellite antenna in the terminal and a satellite transmission link direction, and the satellite transmission link direction is a direction from a location of the terminal to a location of the target satellite;
    receiving, by the terminal, a first input for adjusting an attitude of the terminal; and
    when the terminal determines that the radiation direction of the satellite antenna is aligned with the target satellite, sending, by the terminal, a first data packet to the target satellite.

2.  The method according to claim 1, wherein before the displaying, by a terminal, a first interface, the method further comprises:

    displaying, by the terminal, a second interface, wherein the second interface displays the plurality of geosynchronous orbit satellites; and
    after the terminal determines the target satellite from the plurality of geosynchronous orbit satellites, displaying, by the terminal, a first mark, wherein the first mark indicates that the target satellite is selected.

3.  The method according to claim 1, wherein a service type of the first data packet is a packet communication service, and before the displaying, by a terminal, a first interface, the method further comprises:

    displaying, by the terminal, a third interface, wherein the third interface comprises first message content entered by a user and a first sending control, and the first data packet comprises the first message content; and
    receiving, by the terminal, a second input for the first sending control; and
    the displaying, by a terminal, a first interface specifically comprises:
    displaying, by the terminal, the first interface in response to the first input.

4.  The method according to claim 2, wherein a service type of the first data packet is a packet communication service; and before the displaying, by the terminal, a second interface, the method further comprises:

    displaying, by the terminal, a third interface, wherein the third interface comprises first message content entered by a user and a first sending control, and the first data packet comprises the first message content; and
    receiving, by the terminal, a second input for the first sending control; and
    the displaying, by the terminal, a second interface specifically comprises:
    displaying, by the terminal, the second interface in response to the second input.

5.  The method according to claim 3 or 4, wherein after the sending, by the terminal, a first data packet to the target satellite, the method further comprises:

    receiving, by the terminal, a first application layer return notification; and
    when the first application layer return notification indicates that the first data packet is successfully received, displaying, by the terminal, success prompt information, wherein the success prompt information is used to prompt the user that the first data packet is successfully sent; or
    when the first application layer return notification indicates that the first data packet fails to be received, displaying, by the terminal, failure prompt information, wherein the failure prompt information is used to prompt the user that the first data packet fails to be sent.

6.  The method according to claim 1, wherein a service type of a first application layer packet is a mail message download service, and before the displaying, by a terminal, a first interface, the method further comprises:

    displaying, by the terminal, a fourth interface, wherein the fourth interface comprises a first receiving control; and

receiving, by the terminal, a third input for the first receiving control; and
the displaying, by a terminal, a first interface specifically comprises:
displaying, by the terminal, the first interface in response to the third input.

7. The method according to claim 2, wherein a service type of a first application layer packet is a mail message download service, and before the displaying, by the terminal, a second interface, the method further comprises:

displaying, by the terminal, a fourth interface, wherein the fourth interface comprises a first receiving control; and
receiving, by the terminal, a third input for the first receiving control; and
the displaying, by the terminal, a second interface specifically comprises:
displaying, by the terminal, the second interface in response to the third input.

8. The method according to claim 6 or 7, wherein after the sending, by the terminal, a first data packet to the target satellite, the method further comprises:

receiving, by the terminal, a second data packet, wherein the second data packet comprises second message content, and the second message content is short message content sent by other user equipment to the terminal through the target satellite; and
displaying, by the terminal, the second message content.

9. The method according to claim 6 or 7, wherein after the sending, by the terminal, a first data packet to the target satellite, the method further comprises:
when the terminal does not receive a second data packet within a preset time threshold, displaying, by the terminal, request failure prompt information, wherein the request failure prompt information is used to prompt a user that the first data packet fails to be sent.

10. The method according to claim 1, wherein a service type of a first application layer packet is a mailbox overview query service, and before the displaying, by a terminal, a first interface, the method further comprises:

displaying, by the terminal, a fifth interface, wherein the fifth interface comprises a first query control; and
receiving, by the terminal, a fourth input for the first query control; and
the displaying, by a terminal, a first interface specifically comprises:
displaying, by the terminal, the first interface in response to the fourth input.

11. The method according to claim 2, wherein a service type of a first application layer packet is a mailbox overview query service, and before the displaying, by the terminal, a second interface, the method further comprises:

displaying, by the terminal, a fifth interface, wherein the fifth interface comprises a first query control; and
receiving, by the terminal, a fourth input for the first query control; and
the displaying, by the terminal, a second interface specifically comprises:
displaying, by the terminal, the second interface in response to the fourth input.

12. The method according to claim 10 or 11, wherein after the sending, by the terminal, a first data packet to the target satellite, the method further comprises:
receiving, by the terminal, a third data packet, wherein the third data packet comprises information about a quantity of short messages sent by other user equipment to the terminal through the target satellite.

13. The method according to claim 10 or 11, wherein after the sending, by the terminal, a first data packet to the target satellite, the method further comprises:
when the terminal does not receive a third data packet within a preset time threshold, displaying, by the terminal, query failure prompt information, wherein the query failure prompt information is used to prompt a user that the first data packet fails to be sent.

14. The method according to any one of claims 1 to 4, wherein after the sending, by the terminal, a first data packet to the target satellite, the method further comprises:
sending, by the terminal, a fourth data packet to the target satellite, wherein a service type of the fourth data packet is a mail message download service.

15. The method according to claim 14, wherein after the sending, by the terminal, a fourth data packet to the target satellite, the method further comprises:

receiving, by the terminal, a second data packet, wherein the second data packet comprises second message content, and the second message content is short message content sent by other user equipment to the terminal through the target satellite; and
displaying, by the terminal, the second message content.

16. The method according to any one of claims 1 to 15, wherein after the sending, by the terminal, a first data packet to the target satellite, the method further comprises:
displaying, by the terminal, sending prompt information, wherein the sending prompt information is used to prompt the user that the terminal sends the first data packet to the target satellite.

17. The method according to any one of claims 1 to 16, wherein when the terminal determines that the radiation direction of the satellite antenna is aligned with the target satellite, the method further comprises:
displaying, by the terminal, alignment prompt information, wherein the alignment prompt information is used to prompt the user that the radiation direction of the satellite antenna in the terminal is aligned with the target satellite.

18. The method according to any one of claims 1 to 17, wherein the target satellite is a satellite determined by the terminal as a satellite with strongest signal strength from the plurality of geosynchronous orbit satellites.

19. The method according to any one of claims 1 to 17, wherein the target satellite is a satellite with a shortest beam center distance in the plurality of geosynchronous orbit satellites, and the beam center distance is obtained by the terminal based on longitude and latitude coordinates of the terminal and longitude and latitude coordinates of a beam center of the geosynchronous orbit satellite.

20. The method according to any one of claims 1 to 17, wherein the target satellite is a first historical satellite, and the first historical satellite is a historical satellite corresponding to a first historical location closest to a current location of the terminal in a database of the terminal.

21. The method according to any one of claims 1 to 17, wherein the target satellite is a geosynchronous orbit satellite with a shortest Euclidean distance to the terminal.

22. The method according to any one of claims 1 to 21, wherein the pitch angle deviation is a difference between a pitch angle in the radiation direction of the satellite antenna and a pitch angle in the satellite transmission link direction in a ground coordinate system, and the azimuth angle deviation is a difference between an azimuth angle in the radiation direction of the satellite antenna and an azimuth angle in the satellite transmission link direction in the ground coordinate system.

23. The method according to claim 22, wherein the azimuth angle and the pitch angle in the satellite transmission link direction are obtained by the terminal based on location information of the terminal and location information of the target satellite.

24. The method according to claim 22, wherein the azimuth angle in the radiation direction of the satellite antenna is determined by the terminal based on an azimuth angle in a reference direction of the terminal and an azimuth angle offset, the pitch angle in the radiation direction of the satellite antenna is determined by the terminal based on a pitch angle in the reference direction of the terminal and a pitch angle offset, the azimuth angle offset is determined by the terminal based on an azimuth angle in the radiation direction of the satellite antenna in a spherical coordinate system of the terminal and an azimuth angle in the reference direction of the terminal in the ground coordinate system, and the pitch angle offset is determined by the terminal based on a pitch angle in the radiation direction of the satellite antenna in the spherical coordinate system of the terminal and a pitch angle in the reference direction of the terminal in the ground coordinate system.

25. The method according to claim 24, wherein the azimuth angle and the pitch angle in the reference direction of the terminal in the ground coordinate system are determined by the terminal based on an azimuth angle and a pitch angle in the reference direction of the terminal in a geomagnetic coordinate system and a magnetic declination angle between the geomagnetic coordinate system and the ground coordinate system, and the pitch angle and the azimuth angle in the reference direction of the terminal in the geomagnetic coordinate system are determined by the terminal based on geomagnetic data and attitude data that are of the terminal.

26. The method according to any one of claims 22 to 25, wherein when the terminal determines that the radiation direction of the satellite antenna is not aligned with the target satellite, the method further comprises:
displaying, by the terminal, deviation prompt information, wherein the deviation prompt information is used to prompt the user to adjust the attitude of the terminal, so that the radiation direction of the satellite antenna in the terminal is aligned with the target satellite.

27. The method according to claim 26, wherein that the terminal determines that the radiation direction of the satellite antenna is not aligned with the target satellite specifically comprises:
when the terminal determines that the azimuth angle deviation is greater than a first threshold or the pitch angle deviation is greater than a second threshold, determining, by the terminal, that the radiation direction of the satellite antenna is not aligned with the target satellite.

28. The method according to any one of claims 22 to 27, wherein that the terminal determines that the radiation direction of the satellite antenna is aligned with the target satellite specifically comprises:
when the azimuth angle deviation is less than or equal to the first threshold and the pitch angle deviation is less than or equal to the second threshold, determining, by the terminal, that the radiation direction of the satellite antenna is aligned with the target satellite.

29. A terminal, comprising: one or more processors, a display, and one or more memories, wherein the display and the one or more memories are coupled to the one or more processors, the one or more memories are configured to store computer program code, the computer program code comprises computer instructions, and when the one or more processors execute the computer instructions, the terminal is enabled to perform the method according to any one of claims 1 to 28.

30. A computer-readable storage medium, comprising instructions, wherein when the instructions are run on a terminal, the terminal is enabled to perform the method according to any one of claims 1 to 28.

31. A computer program product, wherein when the computer program product runs on an electronic device, the terminal is enabled to perform the method according to any one of claims 1 to 28.

FIG. 1

Terminal 100

Antenna 1

Antenna 2

| Mobile communication module<br>2G/3G/4G/5G<br>[150] | Wireless communication module<br>BT/WLAN/GNSS/NFC/IR/FM/Satellite<br>communication [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Processor

[110]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 2

FIG. 3A

FIG. 3B

Terminal 100

FIG. 3C

FIG. 3D

**Terminal 100**

Prompt: Satellite searching is in progress. Stay in an open area, to prevent signals from being blocked by any foreign matter within a visible range.

— 341

2

1    3

340

343

Satellite selection is in progress. Wait...

342

FIG. 3E

**Terminal 100**

Prompt: Stay in an open area, to prevent signals from being blocked by any foreign matter within a visible range.

— 351

353A

2

353

350

1

3

Satellite selection succeeds. Adjust an attitude of the terminal based on prompt information to ensure communication quality.

352

FIG. 3F

**Terminal 100**

Satellite alignment - attitude adjustment
Adjust the terminal to an optimal attitude
(Prompt: Follow the instructions to rotate the mobile phone,
so that a satellite icon is aligned with a gray area on the top.
Adjust an angle of the mobile phone up and down until the
two circles overlap. The mobile phone is in the optimal
attitude when vibrated.) — 361

362A
362B  Incline — 360
1 — 362

Top

Mobile
phone

Rotate to the right

Real-time data
Local time: 2021.05.01 PM 02:05
Azimuth angle deviation: 99.12825
Pitch angle deviation: −39.03634
Signal strength: −28.77206 — 363

FIG. 3G

Terminal 100

The mobile phone is aligned with the target satellite.
After being vibrated, the mobile phone will send and
receive satellite short messages.
Keep the attitude unchanged.

~ 371

1

Aligned

~ 370

~ 372

Maintain the current attitude

Real-time data
Local time: 2021.05.01 PM 02:06
Azimuth angle deviation: 1.29671
Pitch angle deviation: –2.31514
Signal strength: –19.70744

~ 373

FIG. 3H

Terminal 100

Lucy
XXXXXXX

● ● ●

Arrive at the camp safely

Sent ———— 381

380

⊕   Send

FIG. 3I

**Terminal 100**

FIG. 3J

Terminal 100

< Lucy
XXXXXXX

• • •

Arrive at the camp safely

Sent ~ 381

Error prompt

This mobile phone does not receive a satellite message.

395A

395

380

OK

395B

⊕  Send

FIG. 3K

**Terminal 100**

401

Satellite messages

2

402B

Lucy    1                                    7/15

Be safe                                              402A

Henry    1                                    7/15

How's the view? Good...

Alice                                        7/16

Where are you?                                       402

Billy                                        7/15

It's a nice day today...

400

FIG. 4A

Terminal 100

Lucy
XXXXXXX

Be safe      411

412 —— 07:31

410 ——

⊕     Send

FIG. 4B

Terminal 100

< Query a satellite message

Select a query object                    Select more

430 —

Alice

Billy                                                     — 431

Henry

Lucy                                                     — 431A

FIG. 4C

Terminal 100

Query result

By 14:06 Beijing time,
the contact "Lucy" sends you
3 messages in total

441

440

FIG. 4D

**Terminal 100**

Satellite alignment - attitude adjustment
Warning: The terminal deviates from the direction of the target satellite. Adjust the terminal as soon as possible and keep the terminal stable.

501

1

Incline

500

502

Top

Mobile phone

Rotate to the left

Real-time data
Local time: 2021.05.01 PM 02:05
Azimuth angle deviation: –49.05226
Pitch angle deviation: –27.04284
Signal strength: –23.77206

503

FIG. 5

Terminal 100

Satellite selection succeeds. Adjust an attitude of the terminal for magnetic field calibration. — 601

Prompt
Magnetic field interference in a current environment is high. Try to draw the number "8" to perform magnetic field calibration. — 602A

— 602

— 602B

600 —

FIG. 6

Terminal 100

Satellite selection succeeds. Adjust an attitude of the terminal for magnetic field calibration. — 701

Prompt — 702

The current magnetic field interference is high, and seriously affects precision of satellite alignment. Move to an area with fewer metal minerals, for example, a greenland or an earthy ground. — 702A

700

| OK | Cannot move |

702B          702C

FIG. 7A

Terminal 100

Satellite selection succeeds. Adjust an attitude
of the terminal for magnetic field calibration. ~ 711

Prompt ~ 712

If you are in an area with fewer metal minerals, tap
"Re-detect". The mobile phone
will re-detect current magnetic field
interference strength ~ 712A

710

Re-detect

712B

FIG. 7B

S801: Determine, in response to an input of sending a first data packet, a target satellite according to a preset rule

↓

S802: Determine, based on location information of a terminal 100 and location information of the target satellite, an azimuth angle and a pitch angle in a satellite transmission link direction in a ground coordinate system

↓

S803: Determine, based on geomagnetic data and attitude data of the terminal 100, a pitch angle and an azimuth angle in a reference direction of the terminal 100 in a geomagnetic coordinate system

↓

S804: Determine, based on the azimuth angle and the pitch angle in the reference direction of the terminal 100 in the geomagnetic coordinate system and a magnetic declination angle between the geomagnetic coordinate system and the ground coordinate system, an azimuth angle and a pitch angle in the reference direction of the terminal 100 in the ground coordinate system

↓

S805: Determine, based on a pitch angle and an azimuth angle in a radiation direction of a satellite antenna in a spherical coordinate system of the terminal, an azimuth angle offset and a pitch angle offset between the radiation direction of the satellite antenna in the ground coordinate system and the reference direction of the terminal 100 in the ground coordinate system

TO
FIG. 8B

TO
FIG. 8B

FIG. 8A

CONT.
FROM
FIG. 8A

CONT.
FROM
FIG. 8A

S806: Compensate the azimuth angle and the pitch angle in the reference direction of the terminal 100 in the ground coordinate system based on the azimuth angle offset and the pitch angle offset, to obtain a pitch angle and an azimuth angle in the radiation direction of the satellite antenna in the ground coordinate system

S810: Receive an input for adjusting the attiude of the terminal 100

S807: Determine an azimuth angle difference and a pitch angle difference between the radiation direction of the satellite antenna and the satellite transmission link direction based on the pitch angle and the azimuth angle in the radiation direction of the satellite antenna and the pitch angle and the azimuth angle in the satellite transmission link direction in the ground coordinate system

S809: Display deviation prompt information, where the deviation prompt information prompts the user to adjust an attitude of the terminal 100, so that the radiation direction of the satellite antenna is aligned with the target satellite

S808: Determine whether the azimuth angle difference is less than or equal to a first threshold and whether the pitch angle difference is less than or equal to a second threshold

No

Yes

S811: Display alignment prompt information, where the alignment prompt information is used to prompt the user that the radiation direction of the satellite antenna is aligned with the target satellite

FIG. 8B

FIG. 9

FIG. 10

FIG. 11

FIG. 12A

First northbound direction

Second northbound direction

Projection of a reference
direction of a terminal 100
on a horizontal plane

Eastbound magnetic
declination angle

Azimuth angle in the first
northbound direction

Azimuth angle in the second
northbound direction

FIG. 12B

FIG. 13

S1401: Display a first interface, where the first interface includes a target satellite selected from a plurality of geosynchronous orbit satellites and a pitch angle deviation and an azimuth angle deviation that are between a radiation direction of a satellite antenna in a terminal 100 and a satellite transmission link direction, and the satellite transmission link direction is a direction from a location of the terminal 100 to a location of the target satellite

S1402: Receive a first input for adjusting an attitude of the terminal 100

S1403: When determining that the radiation direction of the satellite antenna is aligned with the target satellite, the terminal 100 sends a first data packet to the target satellite

FIG. 14

Communication apparatus 1500

Transceiver unit 1510

Processing unit 1520

FIG. 15

Communication apparatus 1600

Transceiver unit 1610

Processing unit 1620

FIG. 16

Communication apparatus 1700

Processor 1701

Instructions

Memory 1704

Instructions

Transceiver 1702

Antenna 1703

FIG. 17

Communication apparatus 1800

Processor 1801

Instructions

Memory 1804

Instructions

Transceiver 1802

Antenna 1803

FIG. 18

## INTERNATIONAL SEARCH REPORT

International application No.

**PCT/CN2022/110346**

**A.    CLASSIFICATION OF SUBJECT MATTER**

H04B 7/185(2006.01)i

According to International Patent Classification (IPC) or to both national classification and IPC

**B.    FIELDS SEARCHED**

Minimum documentation searched (classification system followed by classification symbols)

H04B; H01Q

Documentation searched other than minimum documentation to the extent that such documents are included in the fields searched

Electronic data base consulted during the international search (name of data base and, where practicable, search terms used)

WPI, EPODOC, CNPAT, CNKI: 卫星 俯仰角 方位角 方向 天线 差 偏移 对准 GEO satellite antenna alignment pitch angle azimuth offset value

**C.    DOCUMENTS CONSIDERED TO BE RELEVANT**

| Category* | Citation of document, with indication, where appropriate, of the relevant passages | Relevant to claim No. |
|---|---|---|
| X | CN 111082223 A (96852 FORCES OF PLA) 28 April 2020 (2020-04-28) <br> description, paragraphs [0010]-[0031], and figures 1-4 | 1-31 |
| X | CN 109326884 A (SHANGHAI AEROSPACE SATELLITE APPLICATION CO., LTD.) 12 February 2019 (2019-02-12) <br> description, paragraphs [0039]-[0099] | 1-31 |
| X | CN 111026167 A (STARNETWORKS TECHNOLOGY CO., LTD.) 17 April 2020 (2020-04-17) <br> description, paragraphs [0033]-[0050] | 1-31 |
| X | CN 113055072 A (HEBI TIANHAI ELECTRONIC INFORMATION SYSTEM CO., LTD.) 29 June 2021 (2021-06-29) <br> description, paragraphs [0033]-[0096] | 1-31 |
| X | CN 104125002 A (CHENGDU GUOHENG SPACE TECH ENGINEERING CO., LTD.) 29 October 2014 (2014-10-29) <br> description, paragraphs [0074]-[0125] | 1-31 |
| A | US 2019245614 A1 (QUALCOMM INC.) 08 August 2019 (2019-08-08) <br> entire document | 1-31 |

☐ Further documents are listed in the continuation of Box C.        ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 October 2022** | **25 October 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 362 350 A1

## INTERNATIONAL SEARCH REPORT
### Information on patent family members

International application No.

**PCT/CN2022/110346**

| Patent document cited in search report | | | Publication date (day/month/year) | Patent family member(s) | | | Publication date (day/month/year) |
|---|---|---|---|---|---|---|---|
| CN | 111082223 | A | 28 April 2020 | CN | 211265717 | U | 14 August 2020 |
| CN | 109326884 | A | 12 February 2019 | None | | | |
| CN | 111026167 | A | 17 April 2020 | None | | | |
| CN | 113055072 | A | 29 June 2021 | None | | | |
| CN | 104125002 | A | 29 October 2014 | None | | | |
| US | 2019245614 | A1 | 08 August 2019 | EP | 3513510 | A2 | 24 July 2019 |
| | | | | CN | 109690973 | A | 26 April 2019 |
| | | | | JP | 2019533339 | A | 14 November 2019 |
| | | | | KR | 20190050785 | A | 13 May 2019 |
| | | | | WO | 2018052744 | A2 | 22 March 2018 |
| | | | | BR | 112019004433 | A2 | 28 May 2019 |

Form PCT/ISA/210 (patent family annex) (January 2015)

72

**REFERENCES CITED IN THE DESCRIPTION**

**Patent documents cited in the description**

- CN 202110901843
- CN 202111137529